# EUROPEAN PATENT SPECIFICATION

(11) **EP 3 174 277 B1**
(45) Date of publication and mention of the grant of the patent: **31.10.2018**
(21) Application number: 17150061.4
(22) Date of filing: 25.02.2004
(51) Int. Cl.: H04N 1/21, H04N 1/44, G06F 12/14, H04N 1/32

(54) **IMAGE PROCESSING APPARATUS**
BILDVERARBEITUNGSVORRICHTUNG
APPAREIL DE TRAITEMENT D'IMAGES

(30) Priority: 25.02.2003 JP 2003048109; 26.02.2003 JP 2003049957; 18.12.2003 JP 2003421614
(43) Date of publication of application: 31.05.2017
(62) Divisional of application: 04714490.2
(73) Proprietor: SHARP Kabushiki Kaisha, Sakai-City Osaka 590-8522 (JP)
(72) Inventor: OKAMOTO, Yuji, Kyoto, 6190232 (JP); FUJII, Shuhji, Kyoto, 6190216 (JP); MURAKAMI, Astuhiko, Osaka 590-8522 (JP); NOMURA, Tatsuo, Kyoto, 6190225 (JP); YOSHIURA, Syouichirou, Osaka 590-8522 (JP); KIKUCHI, Gento, Osaka, 5670009 (JP); TOHKI, Shinsaku, Nara, 6320121 (JP)
(74) Representative: Müller Hoffmann & Partner

(56) References cited:
- EP-A- 0 949 806
- JP-A- 2001 175 446
- US-A1- 2002 135 816

## Description

### BACKGROUND OF THE INVETNION

### 1. Field of the Invention

The present invention relates to an image processing apparatus for performing the image processing, which temporarily store (retain) image data inputted via a communication network, for example, an image reading unit such as a scanner, an LAN, and the Internet; outputs the stored (retained) image data to an image forming unit to record (print) it on a recording medium such as copy paper; and transmits it to the outside via facsimile communication or data communication. Particularly, the present invention relates to an image processing apparatus intending to improve security of the image data temporarily captured and stored (retained) inside the apparatus, and more specifically, the present invention relates to an image processing apparatus capable of preventing deterioration of security when the important image data is stored (retained) inside without the user's noticing.

### 2. Description of Related Art

Conventionally, an image processing apparatus provided with an electronic filing function has been known, whose function optically scans an original document to be copied to read it as the image data, temporarily stores the image data in a storage medium, reads arbitrary image data of the original document from the storage medium repeatedly in number of times according to desired number of pages, and outputs it on the copy paper for printing (for example, refer to Japanese Patent Application Laid-Open No. 6-178041 (1994)).

More specifically, in recent years, a multi function is noticeable in the image processing apparatus having a copying function for scanning the image recorded on the paper and copying it. The image processing apparatus provided with a plurality of functions in addition to the copying function has been put to practical use, whose functions are for example, a function of a network printer that is connected to a communication network such as a LAN and receives the image data from the external apparatus such as a personal computer (PC) to output it and a facsimile function to transmit and receive the image data to and from a facsimile apparatus by using facsimile communication or the like. Such an image processing apparatus may be provided with means of storing (retaining) the image data inside even after performing the processing and a function to reuse the image data according to need, for example, by forming an image from the stored (retained) image data and outputting it or transmitting the stored (retained) image data to the external apparatus or the like.

The above-described image processing apparatus provided with the electronic filing function manages designation of a storage location on the recording medium upon storing the image data and designation of the storage location on the storage medium upon reading the image data or the like, for example, by a FAT (File Allocation Table). According to the FAT, an information number is allocated for each information to be stored in the storage medium and a reference value of the FAT is decided by the information number so as to specify the storage location on the storage medium of each image data.

The FAT is updated every time the output for printing of the image data to be managed is terminated. Further, it becomes impossible to read the image data stored in the storage medium specified by the FAT by means of the image processing apparatus when the contents of the FAT are erased or updated. Accordingly, by using the FAT, fear of leaking of the information is decreased and security of the image data is secured.

However, in accordance with progress and spread of the information processing technology in recent years, even when the contents of the FAT are erased or updated, unless the image data itself stored in the storage medium (for example, hard disk) is erased, for example, a malicious third person may detach the storage medium (for example, hard disk) itself from the apparatus to take out it and may read the image data stored therein and may illegally use it.

Therefore, the following technologies considering the security of the image data against leakage or illegal usage of the information are presented.

For example, the image processing apparatus that can be used after carrying out the authentication of a user (refer to Japanese Patent Application Laid-Open No. 7-28365 (1995)), that capable of tracing a leakage route of the image data by embedding the specific information in the image data to be outputted (refer to Japanese Patent Application Laid-Open No. 2000-187419), that for encrypting the image data so as to be stored in the storage medium (refer to Japanese Patent Application Laid-Open No. 1-256068 (1989)), and that for automatically erasing the image data stored in the storage medium when the image data stored in the storage medium is unnecessary (refer to Japanese Patent Application Laid-Open No. 9-223061 (1997)) or the like are applied to these technologies. According to these techniques, it is possible to prevent leakage or illegal usage of the image data remained inside the apparatus.

On the other hand, a data security kit for preventing leakage of the information from the electronic filing function or the illegal usage of the image data by applying the erasing processing to the image data and erasing the image data stored in a memory has been put to practical use. Such a data security kit can be applied to the above-described electronic filing function, so that it is possible to mount the data security kit on the image processing apparatus having such an electronic filing function but also on various apparatuses afterwards at the user's option.

However, when the above-described data security kit is mounted on the image processing apparatus having the conventional electronic filing function, the existing electronic filing function is given priority. Accordingly, this causes a problem such that the above-described operation of the electronic filing function for outputting the image data stored in the storage medium to image processing means such as an image forming unit or the like inhibits erasing of the image data by the data security kit.

In addition, even the above-described image processing apparatus limiting the user cannot prevent the illegal usage of the image data when the identification information such as a password is leaked or when the user himself/herself who is allowed to use the apparatus uses the apparatus illegally. In the same reason, even the image processing apparatus to limit access to the image data or encrypt the image data cannot prevent illegal usage of the image data. In addition, even when the image data to be inputted and outputted in and from the image processing apparatus is monitored, since there is a limit to the contents to be monitored, it is difficult to completely prevent the illegal usage of the image data. Further, it is impossible to decrease the operational mistakes of the user leading to the illegal usage of the image data to zero.

### BRIEF SUMMARY OF THE INVENTION

The present invention has been made taking the foregoing problems into consideration and an object of the present invention is to provide an image processing apparatus for establishing a harmony between a so-called document filing function and a data security function by partially limiting the document filing function in the case where the data security function for protecting the image data inputted by the document filing function and stored in storing means such as a hard disk is set effective to the image data.

In addition, an object of the present invention is to provide an image processing apparatus constructed, when image processing means such as a printer processes the image data stored in image data storing means such as hard disk, so as to operate the image data to be stored (retained) in the image data storing means as it is after reading the image data from the image data storing means and processing it by the image processing means, in which the operation of the above-described image data can be changed.

In addition, an object of the present invention is to provide an image processing apparatus to improve security by changing the operation of the image data so as to encrypt the image data inputted from the outside, store it in the image data storing means, decode the encrypted image data stored (retained) in the image data storing means, and supply it to the image processing means.

Further, an object of the present invention is to provide an image processing apparatus to improve security by changing the operation of the image data so as to replace the image data that has been stored in the image data storing means yet with the random data when the image data stored in the image data storing means is processed by the image processing means.

Still further, an object of the present invention is to provide an image processing apparatus to improve security by changing the operation of the image data so as to forcibly erase the image data stored in the image data storing means.

Still further, an object of the present invention is to provide an image processing apparatus to improve security by changing the operation of the image data so as to forcibly erase the image data that has been stored in the image data storing means yet from the image data storing means when the image data stored in the image data storing means is processed by the image processing means.

Still further, an object of the present invention is to provide an image processing apparatus to improve security by changing the operation of the image data so as to forcibly erase all of the image data stored in the image data storing means.

Still further, an object of the present invention is to provide an image processing apparatus to improve security by temporarily storing the image data to be processed by the image processing means in the image data storing means and immediately erasing this data from the image data storing means when it is processed by the image processing means.

Still further, an object of the present invention is to provide an image processing apparatus to form an image recording the image data in a recording medium such as copy paper, specifically, output the image data for printing, or transmitting the image data to the outside via facsimile communication or data communication as the specific image processing.

Still further, an object of the present invention is to provide an image processing apparatus capable of sufficiently bringing out the functions of the function provided thereto by limiting the functions so as to store only the designated image data when the function to making the image data worthless is operating in the image processing apparatus.

Still further, an object of the present invention is to provide an image processing apparatus capable of preventing the illegal usage when the important image data is automatically stored in the storing means without the user's notice about storage of the image data because the image data is not stored in the storing means until the user instructs the apparatus to store the image data while storing only the image data that is instructed by the user to be stored in the storing means.

An image processing apparatus according to the present invention is defined in claim 1.

The above and further objects and features of the invention will more fully be apparent from the following detailed description with accompanying drawings.

### BRIEF DESCRIPTION OF THE SEVERAL VIEWS OF THE DRAWINGS

FIG. 1 is a block diagram showing the structural example of hardware of an image processing apparatus according to a first embodiment of the present invention.
FIG. 2 is a schematic diagram showing the appearance of the structural example of an operating unit of the image processing apparatus according to the first embodiment of the present invention.
FIG. 3 is a schematic diagram showing the flow of the data inside the image processing apparatus by an arrow according to the first embodiment of the present invention.
FIG. 4 is a flow chart showing the processing procedure of the image data by a control unit when a copying function is set in the image processing apparatus according to the first embodiment of the present invention.
FIG. 5 is a flow chart showing the processing procedure of the image data by the control unit when a printer function is set in the image processing apparatus according to the first embodiment of the present invention.
FIG. 6 is a flow chart showing the processing procedure of the image data by the control unit when a network scanner function is set in the image processing apparatus according to the first embodiment of the present invention.
FIG. 7 is a schematic diagram showing the flow of the data inside the image processing apparatus by an arrow when a data security kit is mounted on the image processing apparatus according to the first embodiment of the present invention.
FIG. 8 is a schematic diagram showing the displaying state of a display unit when the data security kit is not mounted on the image processing apparatus upon placing the copying function on the image processing apparatus according to the first embodiment of the present invention.
FIG. 9 is a schematic diagram showing the displaying state of the display unit when the data security kit is mounted on the image processing apparatus upon placing the copying function on the image processing apparatus according to the first embodiment of the present invention.
FIG. 10 is a schematic diagram showing the displaying state of the display unit when a user touches an icon left under a display screen with the data security kit mounted on the image processing apparatus upon placing the copying function on the image processing apparatus according to the first embodiment of the present invention.
FIG. 11 is a schematic diagram showing the displaying state of the display unit when the data security kit is mounted on the image processing apparatus upon placing the copying function on the image processing apparatus and the "image data erasing processing" functions of the image processing apparatus according to the first embodiment of the present invention.
FIG. 12 is a schematic diagram showing the displaying state of the display unit when the user touches the icon left under the display screen in the condition shown in FIG. 11 with the data security kit mounted on the image processing apparatus upon placing the copying function on the image processing apparatus according to the first embodiment of the present invention.
FIG. 13 is a schematic diagram showing the displaying state of the display unit for setting the details in the "image data erasing processing" operation upon placing the copying function on the image processing apparatus according to the first embodiment of the present invention.
FIG. 14 is a schematic diagram showing the displaying state of the display unit when a window to confirm erasing of the data is displayed in the "image data erasing processing" operation upon placing the copying function on the image processing apparatus according to the first embodiment of the present invention.
FIG. 15 is a schematic diagram showing the displaying state of the display unit when a level of the progress of the data erasing operation is displayed in the "image data erasing processing" operation upon placing the copying function on the image processing apparatus according to the first embodiment of the present invention.
FIG. 16 is a schematic diagram showing the displaying state of the display unit of a screen setting the "number of times of automatic data erasing when each job is terminated" upon placing the copying function on the image processing apparatus according to the first embodiment of the present invention.
FIG. 17 is a flow chart showing the processing procedure when the copying function is set as the image processing with respect to a sequence of procedure of the processing for erasing the image data according to the image processing apparatus of the first embodiment of the present invention.
FIG, 18 is a flow chart showing the processing procedure when the copying function is set as the image processing with respect to a sequence of procedure of the processing for erasing the image data according to the image processing apparatus of the first embodiment of the present invention.
FIG. 19 is a block diagram showing the structural example of hardware of an image processing apparatus according to a second embodiment of the present invention.
FIG. 20 is a schematic diagram showing the flow of the data inside the image processing apparatus when the security program is operating by an arrow according to the first embodiment of the present invention.
FIG. 21 is a flow chart showing the procedure of the output processing of the image that is carried out by the image processing apparatus according to the second embodiment of the present invention.
FIG. 22 is a flow chart showing the procedure of the output processing of the image that is carried out by the image processing apparatus according to the second embodiment of the present invention.
FIG. 23 is a schematic diagram illustrating an instruction acceptance screen of print outputting of the image by copying, which is displayed on the display unit according to the image processing apparatus of the second embodiment of the present invention.
FIG. 24 is a schematic diagram illustrating an instruction receiving screen of print outputting of the image by copying, which is displayed on the display unit according to the image processing apparatus of the second embodiment of the present invention.
FIG. 25 is a flow chart showing the processing procedure upon operating the image data retained in a storage unit by the image processing apparatus according to the second embodiment of the present invention.
FIG. 26 is a schematic diagram illustrating the instruction receiving screen of the image data operation to be displayed on the display unit according to the image processing apparatus of the second embodiment of the present invention.
FIG. 27 is a schematic diagram illustrating the instruction receiving screen of the image data operation to be displayed on the display unit according to the image processing apparatus of the second embodiment of the present invention.
FIG. 28 is a schematic diagram illustrating the instruction receiving screen of the image data operation to be displayed on the display unit by the image processing apparatus according to the second embodiment of the present invention.
FIG. 29 is a schematic diagram illustrating the instruction receiving screen of the image data operation to be displayed on the display unit by the image processing apparatus according to the second embodiment of the present invention.
FIG. 30 is a schematic diagram illustrating the instruction receiving screen of the image data operation to be displayed on the display unit by the image processing apparatus according to the second embodiment of the present invention.
FIG. 31 is a block diagram showing the structural example of hardware of an image processing apparatus according to a third embodiment of the present invention.
FIG. 32 is a schematic diagram showing the appearance of the structural example of an operating unit according to the image processing apparatus of the third embodiment of the present invention.
FIG. 33 is a flow chart showing the procedure of the processing carried out when the image processing apparatus according to the third embodiment of the present invention is activated.
FIG. 34 is a flow chart showing the procedure of the processing carried out when the image processing apparatus according to the third embodiment of the present invention is activated.
FIG. 35 is a schematic diagram illustrating an operational screen to be displayed on the display unit when the image data is instructed to be retained a temporary retaining area according to the image processing apparatus of the third embodiment of the present invention.
FIG. 36 is a schematic diagram illustrating the operational screen to be displayed on the display unit when the image data is instructed to be retained in a temporary retaining area according to the image processing apparatus of the third embodiment of the present invention.
FIG. 37 is a schematic diagram illustrating the operational screen to be displayed on the display unit when the image data is instructed to be retained in a retaining area according to the image processing apparatus of the third embodiment of the present invention.
FIG. 38 is a schematic diagram illustrating the operational screen to be displayed on the display unit when the image data is instructed to be stored in a retaining area according to the image processing apparatus of the third embodiment of the present invention.
FIG. 39 is a schematic diagram illustrating the operational screen to be displayed on the display unit when the image data is instructed to be stored in a retaining area according to the image processing apparatus of the third embodiment of the present invention.
FIG. 40 is a schematic diagram illustrating the operational screen to be displayed on the display unit when the image data is instructed to be stored in a retaining area according to the image processing apparatus of the third embodiment of the present invention.
FIG.41 is a schematic diagram illustrating the operational screen to be displayed on the display unit when the image data is instructed to be stored in a retaining area according to the image processing apparatus of the third embodiment of the present invention.
FIG. 42 is a schematic diagram illustrating the operational screen to be displayed on the display unit when the image data is instructed to be stored in a retaining area according to the image processing apparatus of the third embodiment of the present invention.
FIG. 43 is a schematic diagram illustrating the operational screen to be displayed on the display unit when the image data is instructed to be stored in a retaining area according to the image processing apparatus of the third embodiment of the present invention.
FIG. 44 is a schematic diagram illustrating the operational screen to be displayed on the display unit when the image data is instructed to be stored in a retaining area according to the image processing apparatus of the third embodiment of the present invention.
FIG. 45 is a schematic diagram illustrating the operational screen to be displayed on the display unit when changing of setting of the processing condition of the image data is terminated according to the image processing apparatus of the third embodiment of the present invention.
FIG. 46 is a schematic diagram illustrating the operational screen to be displayed on the display unit when changing of setting of the processing condition of the image data is terminated according to the image processing apparatus of the third embodiment of the present invention.
FIG. 47 is a flow chart showing the procedure of the image processing to be carried out by the image processing apparatus according to the third embodiment of the present invention.
FIG. 48 is a flow chart showing the procedure of the image processing to be carried out by the image processing apparatus according to the third embodiment of the present invention.
FIG. 49 is a schematic diagram illustrating the display screen to be displayed on the display unit after the processing of the image data is terminated according to the image processing apparatus of the third embodiment of the present invention.
FIG. 50 is a flow chart showing the procedure upon reusing the image data to be carried out by the image processing apparatus according to the third embodiment of the present invention.
FIG. 51 is a flow chart showing the procedure upon reusing the image data to be carried out by the image processing apparatus according to the third embodiment of the present invention.
FIG. 52 is a schematic diagram illustrating the operational screen of filing to be displayed on the display unit according to the image processing apparatus of the third embodiment of the present invention.
FIG. 53 is a schematic diagram illustrating the operational screen of scan retaining to be displayed on the display unit according to the image processing apparatus of the third embodiment of the present invention.
FIG. 54 is a schematic diagram illustrating the display screen displaying the using situation of a storage unit according to the image processing apparatus of the third embodiment of the present invention.
FIG. 55 is a schematic diagram illustrating a list display screen of the image data inside a temporary retaining folder to be displayed on the display unit according to the image processing apparatus of the third embodiment of the present invention.
FIG. 56 is a schematic diagram illustrating the list display screen of the image data retained by the retaining area of the storage unit to be displayed on the display unit according to the image processing apparatus of the third embodiment of the present invention.
FIG. 57 is a schematic diagram illustrating the list display screen of the image data retained by the retaining area of the storage unit to be displayed on the display unit according to the image processing apparatus of the third embodiment of the present invention.
FIG. 58 is a schematic diagram illustrating the list display screen of the image data retained by the retaining area of the storage unit to be displayed on the display unit according to the image processing apparatus of the third embodiment of the present invention.
FIG. 59 is a schematic diagram illustrating the operational screen for reusing the image data to be displayed on the display unit according to the image processing apparatus of the third embodiment of the present invention.
FIG. 60 is a schematic diagram illustrating the operational screen for retrieving the image data to be displayed on the display unit according to the image processing apparatus of the third embodiment of the present invention.
FIG. 61 is a schematic diagram illustrating the operational screen for retrieving the image data to be displayed on the display unit according to the image processing apparatus of the third embodiment of the present invention.
FIG. 62 is a schematic diagram illustrating the operational screen for retrieving the image data to be displayed on the display unit according to the image processing apparatus of the third embodiment of the present invention.
FIG. 63 is a schematic diagram illustrating the operational screen for retrieving the image data to be displayed on the display unit according to the image processing apparatus of the third embodiment of the present invention.

### DETAILED DESCRIPTION OF THE PRESENT INVENTION

The present invention will be specifically described below with reference to the drawings showing the embodiments. In the meantime, any of image processing apparatuses according to each of the following embodiments of the present invention is constructed as a digital MFP (Multi-Function Printer).

### (First Embodiment)

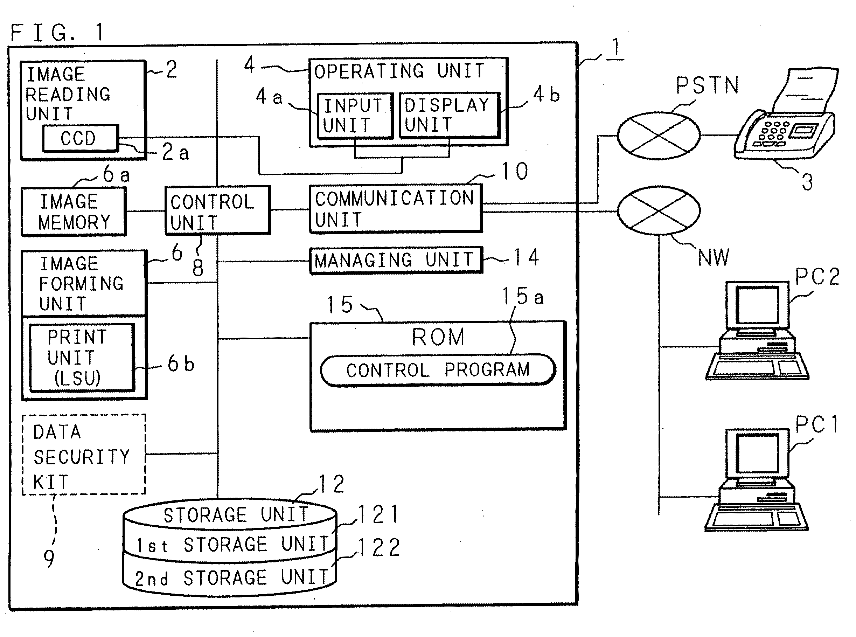

FIG. 1 is a block diagram showing the structural example of hardware of an image processing apparatus (digital MFP) according to a first embodiment of the present invention.

An image processing apparatus 1 according to the first embodiment of the present invention is formed as an MFP that is connected to the external apparatuses such as a personal computer and a facsimile apparatus (a FAX apparatus) via a communication cable or a telephone network and it has a printer function, a network scanner function, and a FAX function or the like using the image data received from these external apparatuses in addition to a copying function. In other words, the image processing apparatus 1 according to the first embodiment of the present invention, as image processing functions, has a function to record the image data on a recording medium such as copy paper to output it for printing, and a function to transmit it to the outside by the facsimile communication or data communication or the like.

The image processing apparatus 1 is mainly provided with an image reading unit 2, an operating unit (an operation panel) 4, an image forming unit 6, a control unit 8, a communication unit 10 as an interface for making communication with the outside, a storage unit 12 to be functioned as image data storing means using hard disk (HD) as the non-volatile storage apparatus or a non-volatile large volumetric storage apparatus, a managing unit 14, and an ROM 15 storing a control program 15a for controlling by the control unit 8 or the like. In the meantime, these respective structural elements are connected to the control unit 8 through a bus. Further, as shown by a broken line, it is possible to mount a data security kit 9 on the image processing apparatus 1 according to the first embodiment of the present invention and when it is mounted thereon, the data security kit 9 is connected to the control unit 8 through the bus.

The image reading unit 2 reads the image of an original document by the optical image reading means, for example, a CCD (Charge Coupled Device) 2a. The image data of the original document read by the image reading unit 2 is stored in an image memory 6a as the volatile storage device such as a RAM page by page (for each page of the original document) and further, the number of the pages of the read original document is stored in the managing unit 14.

The communication unit 10 is connected to the external apparatuses such as personal computers PC1 and PC2 via the Internet as a communication line or a network NW such as a LAN (Local Area Network) and the communication unit 10 transmits and receive the image data by making the data communication with respect to these external apparatuses. In addition, the communication unit 10 is provided with a modem and a NCU (Network Control Unit) (not shown) and the communication unit 10 also can perform the facsimile communication. The modem is connected to a public switched telephone network PSTN via the NCU. The NCU is a hard ware to perform the line control operation such as close and open the line with the analog public switched telephone network PSTN, and according to need, the NCU also can make the facsimile communication with an external FAX apparatus 3 or the like by connecting the modem to the public switched telephone network PSTN.

The image forming unit 6 is provided with a print unit 6b for forming an image from the image data stored in the image memory 6a for storing the image data as the volatile storage apparatus such as the RAM when the image data is inputted from the image reading unit 2 or the communication unit 10. In the meantime, in this example, the print unit 6b is configured by an LSU (Laser Scanning Unit), however, it may be a printer apparatus in an inkjet system or the like.

The managing unit 14 is made of the RAM or the like for storing the information set by the operating unit 4 and the information or the like related to the operation of each structural unit of the apparatus. However, the managing unit 14 may be a non-volatile storage medium that is rewritable such as a flush memory and an EEPROM or the like. In addition, the ROM 15 stores the control program 15a for the control unit 8. The control unit 8 controls each structural element of the image processing apparatus 1 in accordance with the control program 15a stored in the ROM 15 and this makes the image processing apparatus 1 to function as the above-described MFP.

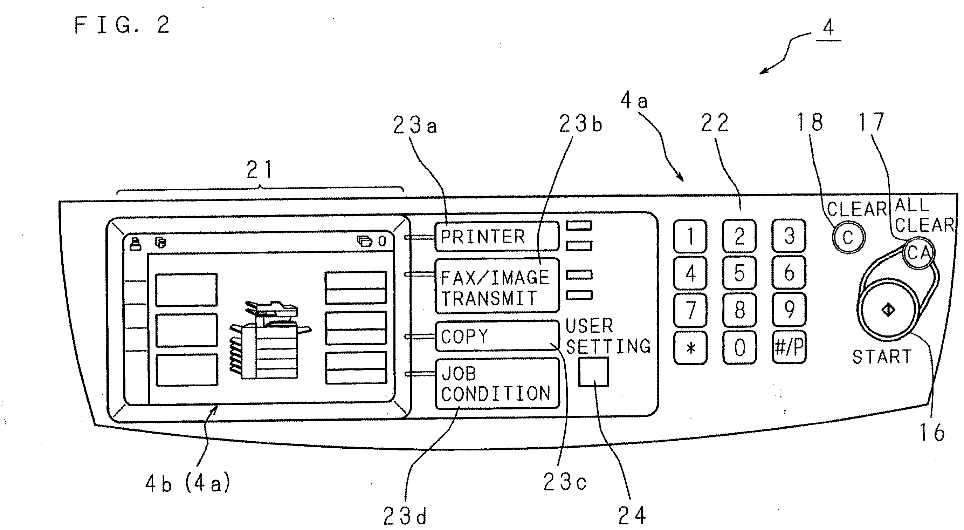

Next, the structural example of the operating unit 4 made of an input unit 4a and a display unit 4b will be described below with reference to the schematic diagram of FIG. 2 showing its appearance.

The operating unit 4 is configured as an operation panel and as described above, the operating unit 4 is provided with the input unit 4a and the display unit 4b. The display unit 4b is configured by a liquid crystal panel of a dot matrix type and can guide and display the information to be noticed to the user in detail as the image processing apparatus 1. In addition, a transparent touch panel 21 is provided on a screen of a liquid crystal panel of the display unit 4b. By operating the touch panel 21 in accordance with the information to be displayed on the liquid crystal panel, the liquid crystal panel functions as a part of the input unit 4a to which corresponding information is inputted as the instruction information. In the meantime, hereinafter, it is assumed that the touch panel 21 also includes the liquid crystal panel configuring the display unit 4b.

In the input unit 4a, a key group is arranged in adjacent to the touch panel 21 other than the above-described elements and the key group includes a "START" key 16 for instructing start of copying, a "CLEAR ALL (CA: all clear)" key 17 for interrupting the processing during execution, a "CLEAR" key 18 for clearing the content of the instructed mode, a numeric keypad 22 for instructing the number of copies or the like, switching keys 23a, 23b and 23c for each mode, and a "USER SETTING" key 24 or the like.

In addition, when the user operates a "JOB CONDITION" key 23d, it is possible to confirm the processing condition of the present job and the past printing condition that printing is terminated.

The control unit 8 is configured by, for example, a CPU (Central Processing Unit) and it controls the operations of respective devices configuring the image processing apparatus 1, such as the operating unit 4, the image forming unit 6, the communication unit 10, and the storage unit 12 or the like in accordance with the control program 15a stored in the ROM 15 in advance. In addition, the control unit 8 outputs the information related to the condition of the image processing apparatus 1 and the information to be noticed to the user or the like on the display unit 4b in accordance with the instruction and the information or the like inputted by the user's operation of each key of the input unit 4a mounted on the operating unit 4.

Further, the control unit 8 also functions as image data operating means for carrying out the operations such as input of the image data, specifically, input of the image data from the image reading unit 2 and input of the image data from the outside via the communication unit 10, and input and output of the inputted image data from and to the image memory 6a and the hard disk 12 or the like.

The storage unit 12 stores the image data to be inputted from the image reading unit 2 and the communication unit 10 and be formed by the image forming unit 6 and the image data to be transmitted to the outside by the facsimile communication or the data communication via the communication unit 10. The details thereof is to be described later.

In the image processing apparatus 1 according to the first embodiment of the present invention, respective functions such as a copying function, a printer function, and a network scanner function or a FAX function are set by the operation of the input unit 4a, and the information about the set functions is stored in the managing unit 14. On the basis of the information stored by the managing unit 14, the control unit 8 controls the operations of respective structural units, carries out the operation corresponding to respective functions, and carries out the operations of input and output of the image data between the image memory 6a and the hard disk 12 or the like.

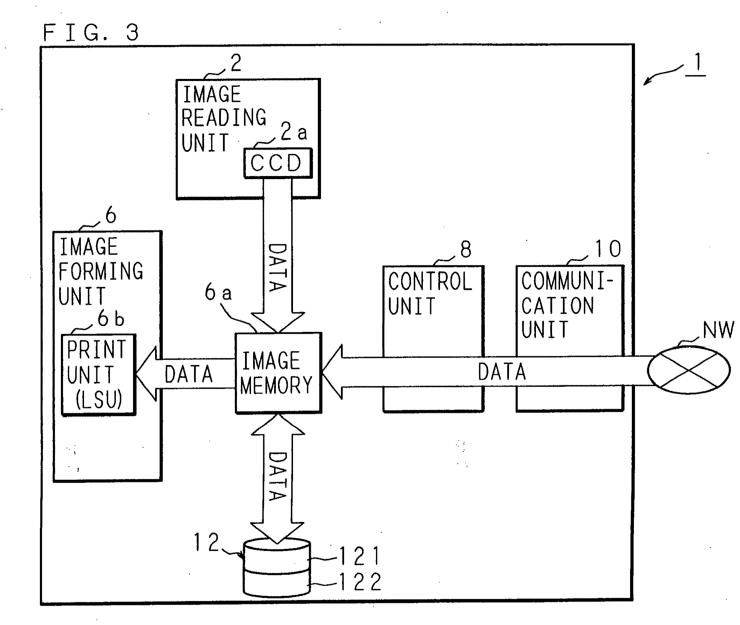

Hereinafter, respective operations when the image processing apparatus 1 according to the first embodiment of the present invention is used as a copying machine, a printer, a network scanner or a facsimile apparatus (a FAX apparatus) will be described with reference to the schematic diagram of FIG. 3 showing the flow of the data inside the image processing apparatus 1. In the meantime, in FIG. 3, only a portion related to the flow of the data is shown.

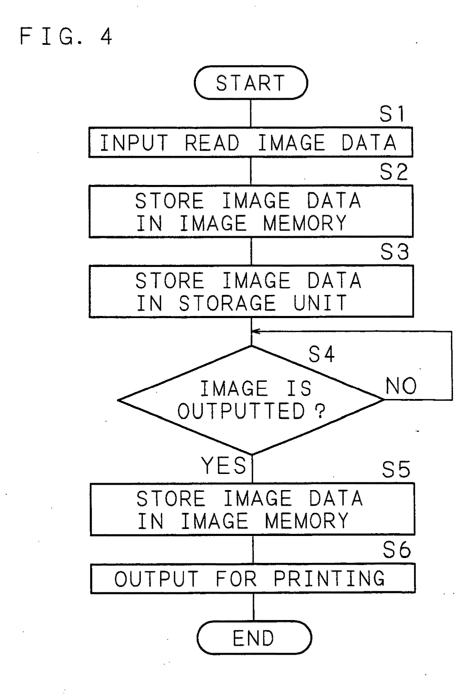

FIG. 4 is a flow chart showing the processing procedure of the image data by the control unit 8 when the copying function is set in the image processing apparatus 1 according to the first embodiment of the present invention.

When using the image processing apparatus 1 as the copying machine due to setting of the functions of the above-described input unit 4a, the control unit 8 inputs the image data of the original document read by the image reading unit 2 (step S1), makes the volatile image memory 6a temporarily store it (step S2), and at the same time, also makes the storage unit 12 store it (step S3). Further, in the case of reading a plurality of sheets of original document (plural pages) by the image reading unit 2, the processing from the above-described step S1 to step S2 is repeated by the number of times according to the number of sheets of original document (the number of pages).

Then, in the case of forming (outputting) an image on the basis of the information about a density of copy and a size of paper or the like set in advance by the operation of the operating unit 4 (YES in step S4), the control unit 8 reads the image data stored in the storage unit 12 to temporarily store it in the image memory 6a (step S5), and transfers the image data stored in the image memory 6a to the print unit 6b and output it on the copy paper or the like for printing (step S6).

In addition, in the case of print outputting a plurality of image data (plural pages) stored in the storage unit 12, the operation from the step S4 to the step S6 is repeated by the number of times corresponding to number of pages of the original document to be outputted for printing in the print unit 6b.

In the meantime, when the function as the above-described copying machine is set on the image processing apparatus 1, the processing is carried out by the control unit 8 on the basis of the control program 15a stored in the ROM 15 by controlling the operations of respective structural units.

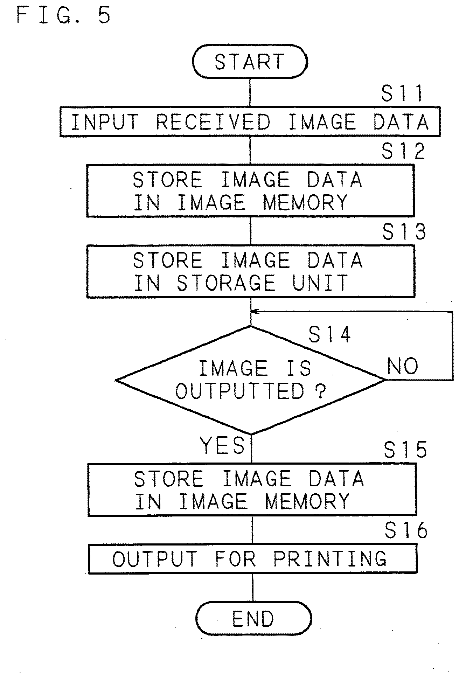

FIG. 5 is a flow chart showing the processing procedure of the image data by the control unit 8 when a printer function is set in the image processing apparatus 1 according to the first embodiment of the present invention.

As described above, the communication unit 10 is connected to the network NW via the communication cable or the like. Accordingly, it is possible to receive the image data from the personal computers PC1 and PC2 as the external apparatuses that are connected to the network NW via the data communication. In the case where the communication unit 10 receives the image data from the personal computers PC1 and PC2, the control unit 8 inputs it (step S11), makes the image memory 6a temporally store it (step S12), and after that, makes the storage unit 12 store it (step S13).

Then, in the case of forming (outputting) an image on the basis of the information about a density and a size of paper or the like set in advance by the operation of the operating unit 4 (YES in step S14), the control unit 8 reads the image data stored in the storage unit 12 to temporarily store it in the image memory 6a (step S15), and transfers the image data stored in the image memory 6a to the print unit 6b and output it for printing (step S16).

In the meantime, when the function as the above-described copying machine is set on the image processing apparatus 1, the processing is carried out by the control unit 8 on the basis of a control program 15a stored in the ROM 15 by controlling the operations of respective structural units.

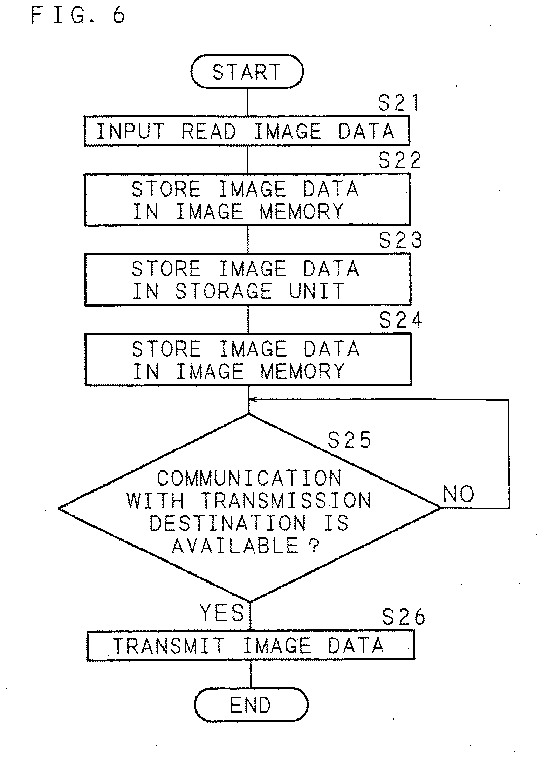

FIG. 6 is a flow chart showing the processing procedure of the image data by the control unit 8 when a network scanner function is set in the image processing apparatus 1 according to the first embodiment of the present invention.

The image data of the original document read by the image reading unit 2 is transmitted from the communication unit 10 to arbitrary one of the personal computers PC1 and PC2 via the network NW. As same as the above-described copying function, the control unit 8 inputs the image data of the original document read by the image reading unit 2 (step S21), makes the volatile image memory 6a temporarily store it (step S22), and after that, makes the storage unit 12 store it (step S23). Then, the control unit 8 reads the image data stored in the storage unit 12 to store it in the image memory 6a (step S 24). After establishing the communication with the external apparatus that is set by the operation of the operating unit 4, for example, the personal computer PC1 (YES in step S25), the control unit 8 outputs the image data stored in the image memory 6a to the communication unit 10 and transmits it to the personal computer of a transmission destination from the communication unit 10 via the network NW (step S26).

In the meantime, when the function as the above-described network scanner function is set on the image processing apparatus 1, the processing is carried out by the control unit 8 on the basis of a control program 15a stored in the ROM 15 by controlling the operations of respective structural units.

Further, the communication unit 10 is also connected to the public switched telephone network PSTN other than the network NW, and also when using the image processing apparatus 1 as the FAX apparatus, the processing of the same procedure is carried out by the control unit 8.

In this embodiment, the image processing apparatus according to the first embodiment of the present invention uses the HD as the storage unit 12 for storing the image data, however, not limited to this, the first embodiment of the present invention can be also applied to the image processing apparatus provided with a non-volatile memory capable of retaining the image data that was stored before even when it is detached from the apparatus or a power source is blocked, a memory having a backup function, and other storage medium using a magnetic storage medium in the same manner.

Next, the electronic filing function which functions by using the storage unit 12 is provided to the image processing apparatus 1 according to the first embodiment of the present invention will be described below.

The storage unit 12 has a data storing area that is logically divided into two, namely, a first storage unit 121 and a second storage unit 122. The image data stored (retained) by the first storage unit 121 is read out to the image memory 6a to be stored therein, and further, it is transferred to the print unit 6b to be outputted for printing to the copy paper. When an image is formed in this way, the image data itself and the history information such as an order, data or the like at which printing was carried out are stored in the first storage unit 121.

Nevertheless printing of the image data stored in the first storage unit 121 is once carried out, it may be necessary to form the image again from the same image data due to inadequate setting of copy number or a paper jam. In such a case, setting the information related to the printing by the operation of the operating unit 4 or setting the information related to the printing in the personal computers PC1 and PC2 or the like connected to the network NW to transmit the set information to the image processing apparatus 1, the image data stored in the first storage unit 121 without being erased is outputted to the image forming unit 6 again to form the image on the basis of each setting.

In addition, the second storage unit 122 is an area to sort and store (retain) the image data stored (retained) by the first storage unit 121, for example, for each data form (hereinafter, referred to as a file format) or for each function such as the copying machine, the printer, the network scanner, and the FAX apparatus. The image data is sorted and stored in the second storage unit 122 after a certain period of time from inputting to the image processing apparatus 1 has passed. Accordingly, in the case of forming such image data, the image data is read out from the second storage unit 122 to be temporally stored in the image memory 6a, and the image data stored in the image memory 6a is transferred to the print unit 6b to be outputted for printing on the copy paper.

In the meantime, the capacity of the first storage unit 121 is set to be smaller as compared to the second storage unit 122. Accordingly, when there is no sufficient vacant area (storing area) for storing the data in the first storage unit 121, for example, the image data stored by the first storage unit 121 is erased from the older image or it is updated (rewritten) into the newly inputted image data or the image data after a certain period of time since it is stored in the first storage unit 121 is automatically erased.

On the other hand, the image data stored in the second storage unit 122 is sorted and stored as described above. The image data stored in the second storage unit 122 is never erased unless the information for instructing erasing is set by the operation of the operating unit 4. However, when the storage capacity of the second storage unit 122 attains to the limit capacity, this fact is displayed on the display unit 4b and further noticed to the user. Thereby, when the user operates the operating unit 4 to perform setting of, for example, erase the image data, increase the HD, or replace the HD having a larger storage capacity, it is possible to newly obtain or add a vacant storage area of the capacity of the second storage unit 122. In addition, the second storage unit 122 has a plurality of folders classified for each file format of the image data, for example, and sorts the image data according to kinds (file systems) thereof and stores it.

As described above, the image processing apparatus 1 according to the first embodiment of the present invention has the electronic filing function. Accordingly, when print processing of the image data stored in the first storage unit 121 or print processing of the image data stored in the second storage unit 122 is carried out, the image data stored in the second storage unit 122 is outputted to the image forming unit 6. In this case, the image data stored in the second storage unit 122 is temporally stored in the first storage unit 121. In addition, in the case of forming an image after a certain period of time, the image data stored in the first storage unit 121 is sorted and stored in the second storage unit 122, and the image data stored in the second storage unit 122 is outputted to the image forming unit 6 according to request of print processing so as to form an image.

The image processing apparatus 1 according to the first embodiment of the present invention will be described below about the case where the data security kit 9 is mounted afterward or the case where the data security kit 9 is mounted so as not to be operated but it is switched so as to be operated at a certain point of time.

In the above case, it is possible to partially or entirely stop the above-described function of the image processing apparatus 1 according to the first embodiment of the present invention. Specifically, the control unit 8 can partially or entirely stop the original operations of the first storage unit 121 and the second storage unit 122 of the storage unit 12. In other words, the control unit 8 usually functions as the image data operating means, however, it functions as operation changing means to change the operation of the image data when the data security kit 9 is operating.

Accordingly, when the data security kit 9 is operating, it becomes possible to secure security of the image data, for example, with respect to the image data whose print processing has been finished, by erasing the file management information (FAT data) of the storage unit 12 stored in the managing unit 14 immediately finishing of print processing, erasing the image data stored in the image memory 6a, erasing the image data stored in the storage unit 12 by updating with the bit data or the byte data configured at random (hereinafter, referred to as the erasing processing), or carrying out the erasing processing after encrypting the data so as to hardly read and temporarily storing it.

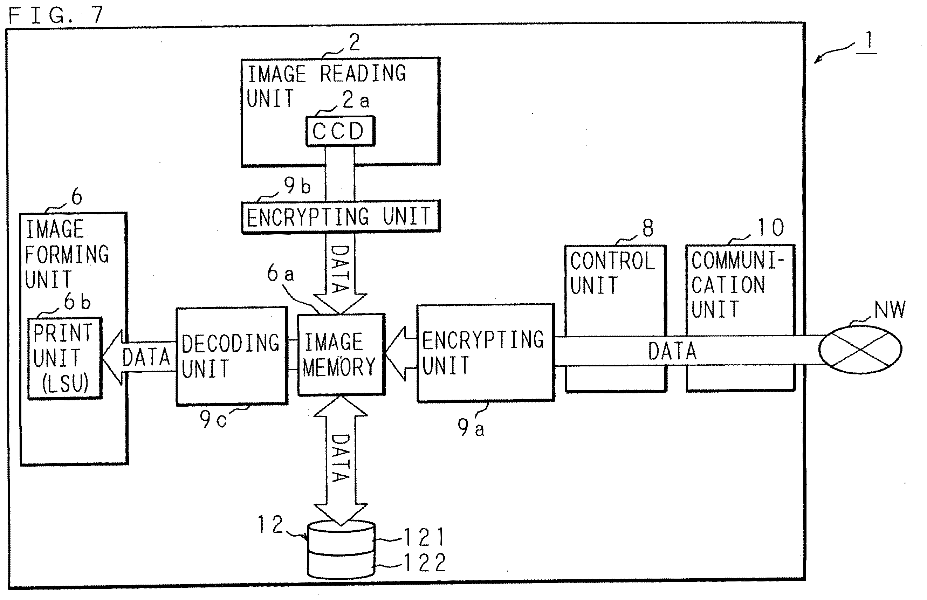

FIG. 7 is a schematic diagram showing the flow of the data inside the image processing apparatus 1 by an arrow when the data security kit 9 is mounted on the image processing apparatus 1 according to the first embodiment of the present invention. In this example shown in FIG. 7, in addition to the above-described example shown in FIG. 3, encrypting units 9a and 9b and a decoding unit 9c are added as new functional blocks because the data security kit 9 is mounted thereon.

The encrypting unit 9a is provided for encrypting the image data received by the communication unit 10 during transfer of it to the image memory 6a, the encrypting unit 9b is provided for encrypting the image data read by the image reading unit 2 during transfer of it to the image memory 6a, and the decoding unit 9c is provided for decoding the encrypted image data stored in the image memory 6a during transfer of it to the print unit 6b of the image forming unit 6 to restore it into the original image data.

In the meantime, the encrypting units 9a, 9b and the decoding unit 9c may be an option board for encrypting and decoding by hard ware, or they may be a plug-in software for encrypting and decoding by software. In any case, these encrypting units 9a, 9b and the decoding unit 9c are the functions to be added by mounting the data security kit 9.

The image data inputted from the image reading unit 2 or the communication unit 10 via the network NW is encrypted by the encrypting unit 9b or 9a of the data security kit 9 to be temporarily stored in the image memory 6a. Then, when the encrypted image data stored in the image memory 6a is outputted to the print unit 6b, it is decoded by the decoding unit 9c to be restored into the original image data.

In the meantime, when the encrypted image data stored in the image memory 6a is stored in the storage unit 12, it is stored as being encrypted. In addition, the encrypted image data having been stored in the storage unit 12 is automatically erased by the control unit 8. Accordingly, in the image processing apparatus 1 according to the first embodiment of the present invention, the security protection of the image data after image-processed is realized.

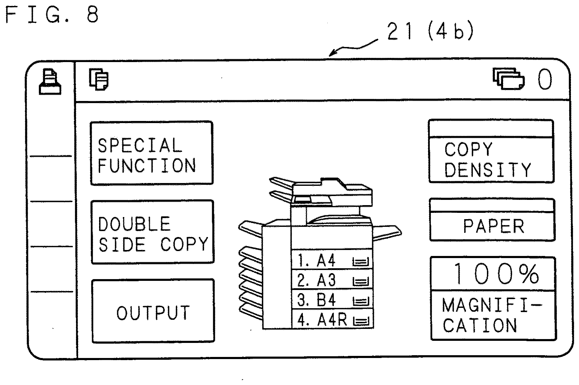

Next, upon setting of the copy function of the image processing apparatus 1 according to the first embodiment of the present invention, the display unit 4b in each processing step to carry out the erasing processing of the image data according to the security level, specifically, the displaying state of the touch panel 21 will be described with reference to the schematic diagrams of FIG. 8 to FIG. 12.

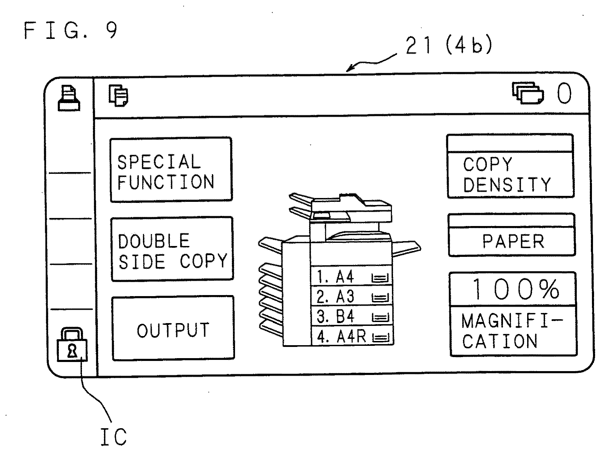

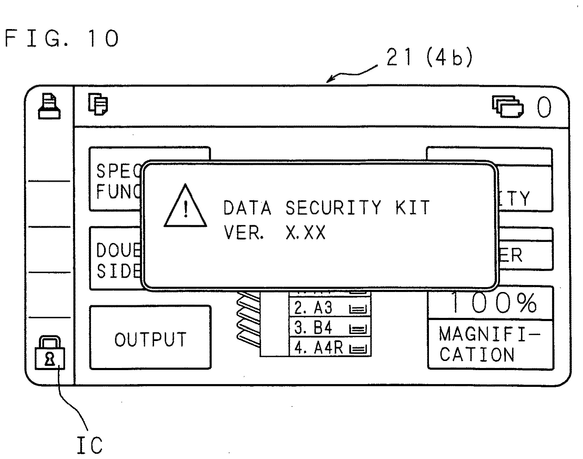

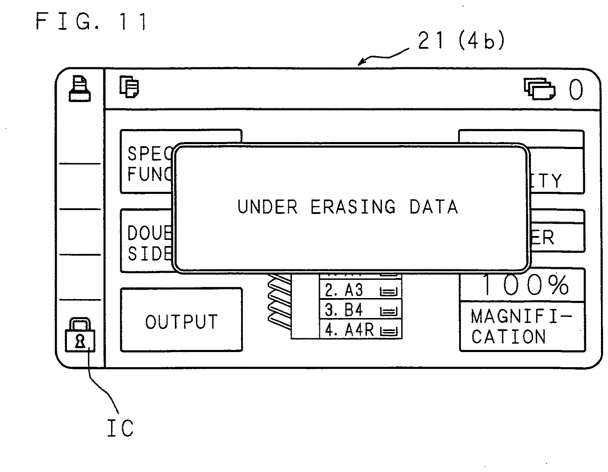

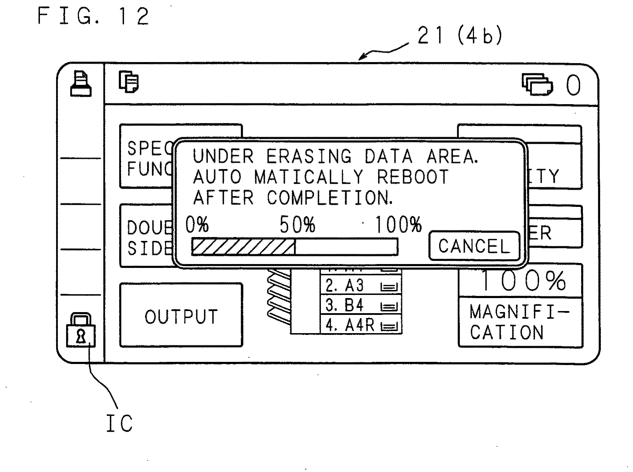

FIG. 8 shows the displaying state of a display unit 21 when the data security kit 9 is not mounted on the image processing apparatus 1. FIG. 9 shows the displaying state of a display unit 21 when the data security kit 9 is mounted on the image processing apparatus 1. FIG. 10 shows the displaying state of a display unit 21 when the user touches a portion of an icon IC left under the display screen with the data security kit 9 mounted on the image processing apparatus 1 shown in FIG. 9. FIG. 11 shows the displaying state of a display unit 21 when the "image data erasing processing" functions. FIG. 12 shows the displaying state of a display unit 21 when the user touches the portion of the icon IC left under the display screen of the image processing apparatus 1 in the state shown in FIG. 11.

The screen of the touch panel 21 shown in FIG. 8 displays that the "electronic filing function" as the existing function of the image processing apparatus 1 is activated and the image data after printing is to be stored in the storage unit 12 (the first storage unit 121).

The screen of the touch panel 21 shown in FIG. 9 displays the data security kit 9 capable of activating the "image data erasing processing" function is mounted on the image processing apparatus 1. Furthermore, when the "image data erasing processing" is activated, an icon IC figuring a "padlock" indicating that the "image data erasing processing" is available is displayed left under the display screen when the "image data erasing processing" function is activated so that the user can understand by instinct that the "image data erasing processing" is available.

In the case where the icon IC left under the display screen is touched with the touch panel 21 shown in FIG. 9 displayed, when the "image data erasing processing" is not operated (the apparatus is standing by), a message as shown in FIG. 10, specifically, a title and the version information of the data security kit 9 or the like are displayed in a window approximately at a center of the display screen of the touch panel 21.

In the meantime, the "image data erasing processing" function is optionally treated as the "data security kit" in the image processing apparatus 1, and in the window of the display screen on the touch panel 21 shown in FIG. 1, they are displayed as the "data security kit". Accordingly, the user can confirm the contents and the versions or the like of the "data security kit" and the "image data erasing processing" on the screen shown in FIG. 10.

In addition, as shown in FIG. 11, when the "image data erasing processing" is activated due to termination of a job or clear of a job or the like, namely, when the data stored by the storage unit 12 (the first storage unit 121 and/or the second storage unit 122) is erasing, a message of "UNDER ERASING DATA" indicating such fact is displayed in the window approximately at a center of the display screen of the touch panel 21.

When the icon IC left under the display screen of the touch panel 21 shown in FIG. 11 is touched, as shown in FIG. 12, a message of "UNDER ERASING DATA AREA" is displayed indicating that the erasing processing of the image data stored by the storage unit 12 (the first storage unit 121 and/or the second storage unit 122) is carried out by the "image data erasing processing" and further, the progressing condition of the processing is displayed by a level approximately at a center of the display screen of the touch panel 21. Thereby, the user can confirm the operational condition of the erasing processing of the image data by the "image data erasing processing".

In addition, as described above, when the erasing processing of the image data stored by the storage unit 12 (the first storage unit 121 and/or the second storage unit 122) is carried out by the "image data erasing processing", it is more effective to make the user to understand by instinct that the "image data erasing processing" is activated by displaying the icon IC in a state different from a normal displaying state such as turning on and off or changing a color of the icon IC .

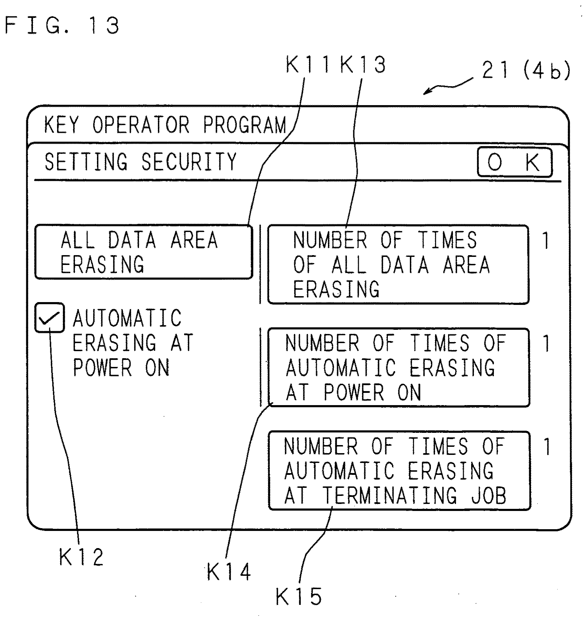

Next, the operation setting related to the "image data erasing processing" will be described below with reference to the schematic diagrams of the display screen of the touch panel 21 shown in FIG. 13 to FIG. 16.

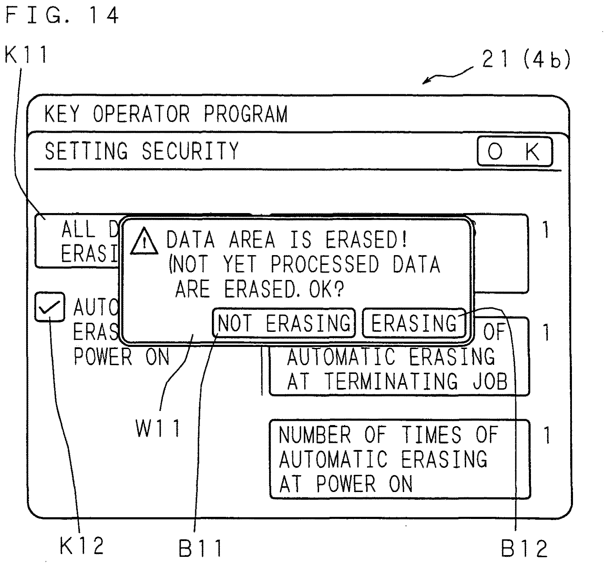

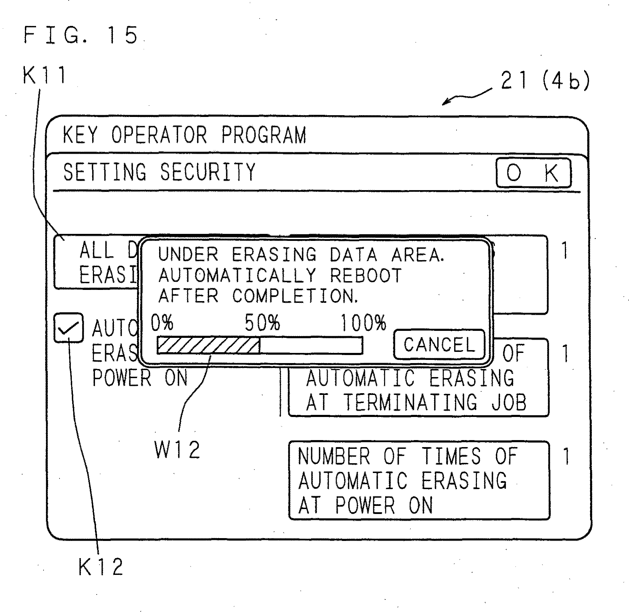

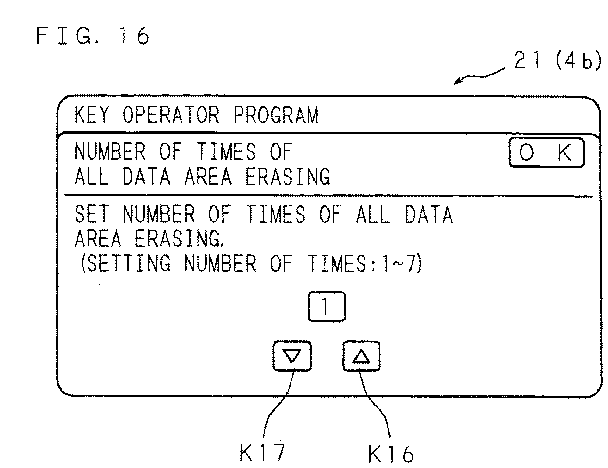

In the meantime, FIG. 13 shows the display screen of the touch panel 21 for setting the details in the "image data erasing processing" operation. FIG. 14 shows the display screen of the touch panel 21 when a confirmation window of erasing of the data is. FIG. 15 shows the display screen of the touch panel 21 when of the progressing condition of the data erasing operation in the storage unit 12 is displayed by a level. FIG. 16 shows the display screen of the touch panel 21on a screen setting the "number of times of automatic data erasing when each job is terminated".

On the display screen of the touch panel 21 shown in FIG. 13, an "ALL DATA AREA ERASING" key K11 for instructing to forcibly erase the data stored by the storage unit 12 (the first storage unit 121 and/or the second storage unit 122) at arbitrary timing and a check box K12 of "AUTOMATIC ERASING AT POWER ON" for setting the apparatus to carry out the all erasing processing of the image data stored by the storage unit 12 every time the power source of the image processing apparatus 1 is turned on are displayed. Further, when the check box K12 of "AUTOMATIC ERASING AT POWER ON" is checked, a check mark "V" is displayed.

In addition, on the display screen of the touch panel 21 shown in FIG. 13, a "NUMBER OF TIMES OF ALL DATAAREA ERASING" key K13 for setting the number of times of erasing processing of the "erasing all data area", a "NUMBER OF TIMES OF AUTOMATIC ERASING AT POWER ON" key K14 for setting the number of times of erasing processing of the "automatic erasing at power on", and a "NUMBER OF TIMES OF AUTOMATIC ERASING AT TERMINATING JOB" key K15 for setting the number of times of carrying out the erasing processing only about the printed image data stored by the storage unit 12 (the first storage unit 121 and/or the second storage unit 122) from the storage unit 12 are displayed.

At respective right positions in the vicinity of these "NUMBER OF TIMES OF ALL DATAAREA ERASING" key K13, "NUMBER OF TIMES OF AUTOMATIC ERASING AT POWER ON" key K14, and "NUMBER OF TIMES OF AUTOMATIC ERASING AT TERMINATING JOB" key K15, the number of times of erasing set by the operation of each key is displayed. However, each default thereof is "1" both in the "NUMBER OF TIMES OF ALL DATA AREA ERASING" key K13 and the "NUMBER OF TIMES OF AUTOMATIC ERASING AT TERMINATING JOB" key K15, and "0" in the "NUMBER OF TIMES OF AUTOMATIC ERASING AT POWER ON" key K14.

In the case where the number of times of erasing processing appropriate for a security level is set by the above-described operation of each key, when the image data stored by the storage unit 12 (the first storage unit 121 and/or the second storage unit 122) becomes unnecessary, the erasing processing of the data is repeated by the number of times of the erasing processing that is set. Accordingly, it is possible to set the number of times of the erasing processing according to the security level required by the image processing apparatus 1 in accordance with the place where the apparatus is installed in the image processing apparatus 1. In addition, by the operation of the "ALL DATAAREA ERASING" key K11, the operation to carry out the erasing processing of the all image data stored by the storage unit 12 at the arbitrary timing is very effective, for example, in the case of erasing the important data with the very high security level just after outputting it for printing.

Upon carrying out the erasing processing of the all image data stored by the storage unit 12 by touching the "ALL DATA AREA ERASING" key K11 on the display screen of the touch panel 21, as shown in FIG. 13, a confirmation window W11 is displayed approximately at a center of the display screen of the touch panel 21, as shown in FIG. 14. On this confirmation window W11, a button B11 of "NOT ERASING" and a button B12 of "ERASING" are displayed. Then, when the button B12 of "ERASING" is touched, the erasing processing of the all data stored by the storage unit 12 is started.

When the erasing processing of the all data stored by the storage unit 12 is started in practice as described above, as shown in FIG. 15, a window W12 for displaying the progressing condition of the processing is displayed by a level on the display screen of the touch panel 21.

When the "NUMBER OF TIMES OF ALL DATA AREA ERASING" key K13 or the "NUMBER OF TIMES OF AUTOMATIC ERASING AT TERMINATING JOB" key K15 or the "NUMBER OF TIMES OF AUTOMATIC ERASING AT POWER ON" key K14 is touched on the above-described display screen of the touch panel 21 as shown in FIG. 13, on the display screen of the touch panel 21, the setting screen of the "number of times of erasing all data area" or the "number of times of automatic erasing at terminating job" or the "number of times of automatic erasing at power on" is displayed. FIG. 16 shows the display screen of the touch panel 21 when the "NUMBER OF TIMES OF ALL DATA AREA ERASING" key K13 is touched as an example.

As shown in the FIG. 16, for example, when the "NUMBER OF TIMES OF ALL DATA AREA ERASING" key K13 is touched, an "UP" key K16 and a "DOWN" key K17 are displayed. Therefore, according to operation of any key, it is possible to set the number of times of erasing processing arbitrarily. In the meantime, also when other key, namely, the "NUMBER OF TIMES OF AUTOMATIC ERASING AT TERMINATING JOB" key K15 or the "NUMBER OF TIMES OF AUTOMATIC ERASING AT POWER ON" key K14 is touched on the display screen of the touch panel 21 shown in FIG. 13, as same as the above-described case that the "NUMBER OF TIMES OF ALL DATA AREA ERASING" key K13 is touched, it is possible to set the number of times of erasing processing arbitrarily.

However, with respect to the processing of "automatic erasing at terminating job", no matter whether or not the "NUMBER OF TIMES OF AUTOMATIC ERASING AT TERMINATING JOB" key K15 is touched, a default "1" is automatically set as the number of times of automatic erasing when the "image data erasing functions" are available by mounting the data security kit 9 on the image processing apparatus 1.

It is preferable that the above-described setting of each function of the data security kit 9 is carried out according to the security level required at the location where the image processing apparatus 1 is installed when the data security kit 9 is mounted on the image processing apparatus 1 and the "image data erasing functions" are available. In addition, by touching the "ALL DATA AREA ERASING" key K11, in accordance to need of each time, it is possible to carry out the erasing processing of the all data stored by the storage unit 12.

In the meantime, the image processing apparatus 1 also can carry out the same processing as the above-described processing when using it as the copying machine even when it is used as the printer, the network scanner, or the FAX.

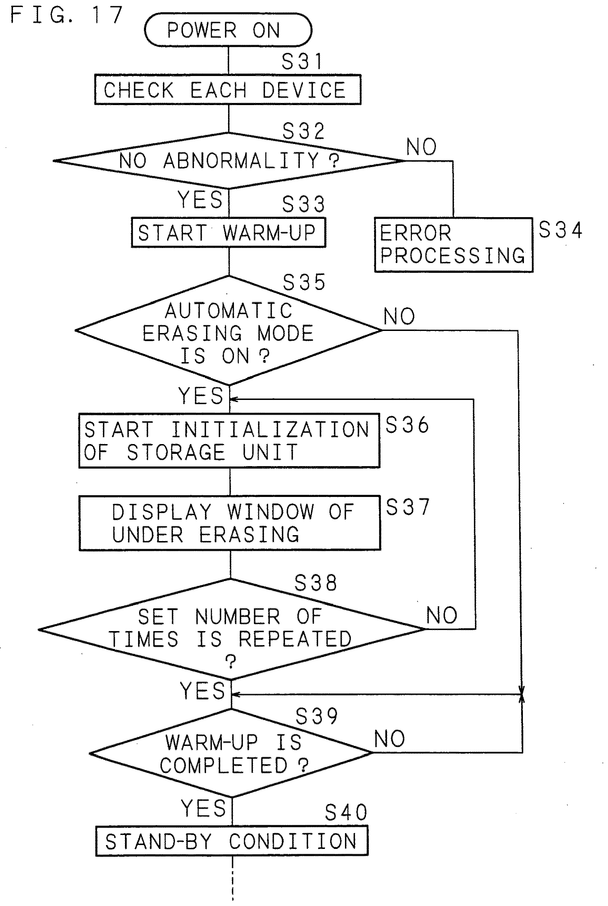

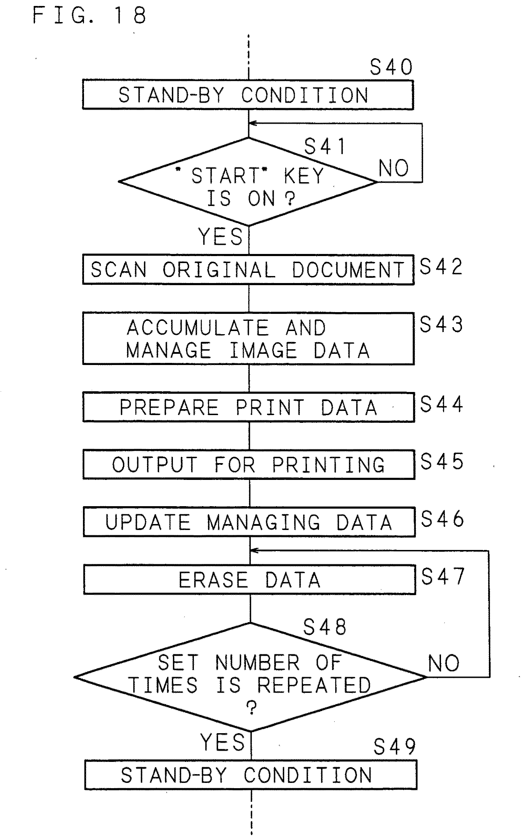

Next, a sequence of procedure of the erasing processing of the image data of the storage unit 12 of the image processing apparatus 1 according to the first embodiment of the present invention will be described below with reference to the flow charts shown in FIG. 17 and FIG. 18 taking the procedure when the copying function is set as the image processing.

The following processing are carried out by controlling the operations of each structural unit by means of the control unit 8 based on the control program 15a stored in the ROM 15.

When the power source of the image processing apparatus 1 is turned on, at first, the control unit 8 checks the condition of each device to configure the apparatus (step S31). When there is no abnormality as a result of the checking (YES in step S32), the control unit 8 starts warm-up of each device so that the image processing apparatus 1 can carry out predetermined operation (step S33).

On the other hand, when abnormality is found as a result of checking of each device (NO in step S32), the control unit 8 carries out predetermined error processing according to the found abnormality (step S34). In the case where abnormality is found in the touch panel 21, as this error processing, for example, the processing to display a window including a message indicating that abnormality is found in the touch panel 21 and a message for requiring confirmation of the fact to the user is available.

Upon starting the above-described warm-up (step S33), next, the control unit 8 confirms whether or not the "mode of automatic erasing at power on" is set (on) for initializing the storage unit 12 when turning on the power source (step S35). As described above, setting of this "mode of automatic erasing at power on" is set by checking the check box K12 of "AUTOMATIC ERASING AT POWER ON" on the display screen of the touch panel 21 shown in FIG. 13.

When the "mode of automatic erasing at power on" is set (Yes in step S35), the control unit 8 starts the initialization of the storage unit 12 (step S36) and further, displays that the image data stored by the storage unit 12 is under erasing (progressing condition) on the window on the display screen of the touch panel 21 (step S37). In this time, the control unit 8 repeats the initialization processing by carrying out the erasing processing of the data stored by the storage unit 12 by the number of times of the erasing processing set in advance in the above-described display screen of the touch panel 21 shown in FIG. 13 and FIG. 16 (step S38). By this processing, all of the image data stored by the storage unit 12 are erased.

When the erasing processing of the data in the storage unit 12 is finished (YES in step S38) or when the "mode of automatic erasing at power on" is not set (on) (NO in step S35), the control unit 8 stands by till warm-up of each device is completed after making the display screen of the touch panel 21 to display a basic screen (No in step S39), and when the warm-up of each device is competed (YES in step S39), the control unit 8 stands ready to set a job (step S40).

On standby in step S40, the original document is put on a set position of the image reading unit 2 and the copying function with respect to this original document is set, and then, a "START" key 16 is turned on (YES in step S41), the original document is optically scanned by the CCD 2a of the image processing apparatus 2 (step S42) to temporarily store the image data acquired as a result of this in the image memory 6a page by page. Then, the control unit 8 transfers the image data stored in the image memory 6a to the storage unit 12 so as to store it in the first storage unit 121 (under certain circumstances, the second storage unit 122) and it stores the managing information (the FAT data) with respect to the image data stored in the storage unit 12 in the managing unit 14. Thus, the image data is accumulated and managed (step S43).

The control unit 8 prepares the print data by reading the image data stored in the storage unit 12 as described above from the first storage unit 121 of the storage unit 12 adjusting to timing of image formation (print outputting) to store it in the image memory 6a or reading the image data from the second storage unit 122 into the first storage unit 121 to store it in the image memory 6a page by page (step S44). When the necessary print data is prepared in the image memory 6a, the control unit 8 transfers the print data to the print unit 6b (LSU: laser scanning unit) to output it for printing (step S45).

Thus, when it is confirmed that the image data is outputted for printing, the control unit 8 updates the managing data (the FAT data) stored in the managing unit 14 with respect to this image data after completion of the processing (step S46), and when a sequence of print processing is terminated, the control unit 8 carries out the erasing processing with respect to the storage area in the storage unit 12 of the image data that is used for this sequence of print processing (step S47). Also in this case, the control unit 8 repeats the initialization processing by carrying out the erasing processing of the data stored by the storage unit 12 by the number of times of the erasing processing set in advance in the display screen of the touch panel 21 shown in FIG. 13 and FIG. 16 (step S48). After that, the image processing apparatus 1 stands by again (step S49).

In the meantime, the image processing apparatus 1 according to the first embodiment of the present invention can operate the image data when it is used as the printer, the network scanner, or the FAX apparatus as same as the above-described case that it is used as the copying machine.

### (Second Embodiment)

Next, the second embodiment according to the present invention will be specifically described with reference to the drawings.

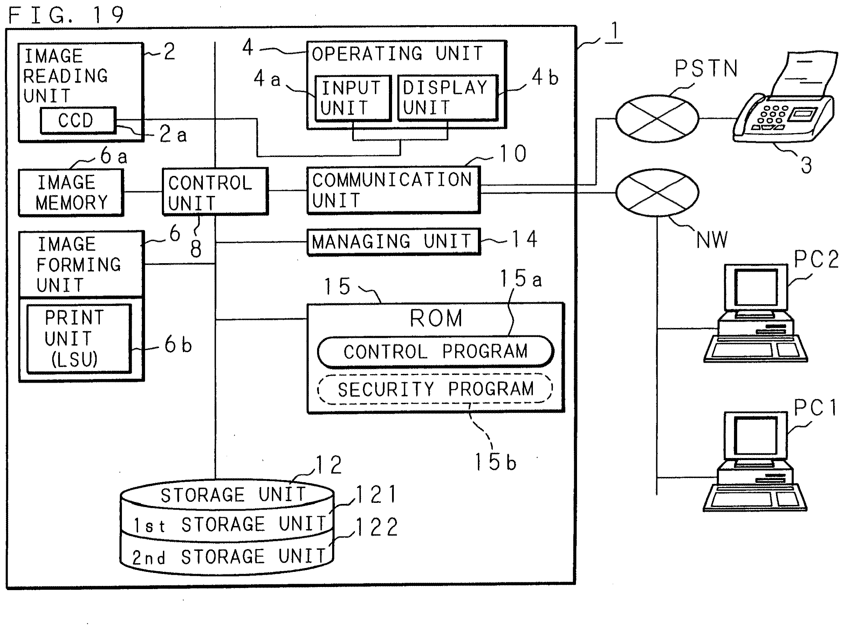

FIG. 19 is a block diagram showing the structural example of hardware of an image processing apparatus (the digital MFP) according to a second embodiment of the present invention. In the meantime, the structural example of hardware of the image processing apparatus according to the second embodiment shown in FIG. 19 is different from that of the above-described first embodiment shown in FIG. 1 in that the ROM 15 stores a security program 15b for improving the security in addition to the control program 15a in place of the data security kit 9. However, other structural elements are the same as those of the first embodiment, so that the explanation thereof is herein omitted.

According to the image processing apparatus 1 of the second embodiment of the present invention, the control unit 8 can control the apparatus in accordance with the security program 15b for improving the security in addition to the control program 15a stored in the ROM 15. By replacing the ROM not storing the security program 15b with the ROM 15 storing it, or by receiving the instruction to operate the security program 15b that is stored in the ROM 15 but is set not to be operated by means of the operating unit 4, the control unit 8 can control the image processing apparatus 1 in accordance with the security program 15b stored by the ROM 15.

In this case, the control unit 8 functions as invalidating means by carrying out the control in accordance with the security program 15b stored by the ROM 15. In this case, the image data stored by the storage unit 12 are invalidated, namely, the image data stored by the storage unit 12 are unavailable by encrypting, erasing or overwriting with predetermined information or the like. In addition, even if the image data is erased, the image data is restored due to magnetism remaining in the storage unit 12, so that it is also possible to set the apparatus so as to carry out the control unit 8 with respect to the same data by a plurality of times.

When the security program 15b is not operated, the managing unit 14 stores the managing information indicating that the security program 15b is not in the state of operation. In addition, in the case where the ROM without storing the security program 15b is replaced with the ROM 15 storing the security program 15b or in the case where the operating unit 4 receives the instruction to operate the security program 15b stored by the ROM 15, the control unit 8 makes the managing unit 14 store the managing information indicating that the security program 15b is in the state of operation.

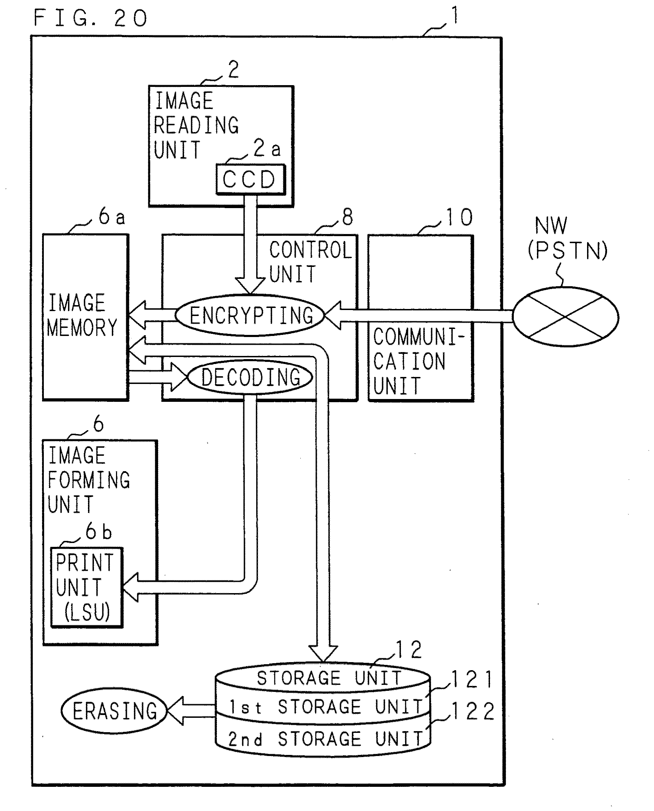

FIG. 20 is a schematic diagram showing the flow of the data inside the image processing apparatus when the security program 15b is operating by an arrow. In the output processing (the print processing) of the image, by receiving the instruction of copying by the operating unit 4, or receiving the image data transmitted from the PC at the communication unit 10 via the network NW, or receiving the image data at the communication unit 10 via the PSTN through facsimile communication or the like, the control unit 8 checks the managing information stored by the managing unit 14 to determine whether or not the content of the managing information indicates that the security program 15b is in the state of operation.

In the case where the security program 15b is in the state of operation, the control unit 8, in accordance with the control program 15a and the security program 15b stored by the ROM 15, encrypts the image data and store it in the image memory 6a temporarily, and then, stores it in the first storage unit 121, reads out the encrypted image data stored in the first storage unit 121 to the image memory 6a, decodes the read image data, and transfers it to the image forming unit 6 to output it for printing. After completion of print outputting, the control unit 8 erases the image data stored in the first storage unit 121 in accordance with the control program 15a and the security program 15b stored in the ROM 15.

Thus, when the control unit 8 controls the image processing apparatus 1 in accordance with the security program 15b, the control unit 8 secures the security of the information by invalidating the image data to be processed by encrypting and erasing.

Further, according to the second embodiment of the present invention, when the control unit 8 controls the image processing apparatus 1 in accordance with the security program 15b, in accordance with the control program 15a, the control unit 8 accepts the designation of the image data to be retained with respect to the image data that is necessarily retained without erasing when processing the image data and it retains the designated image data in the first storage unit 121 without erasing.

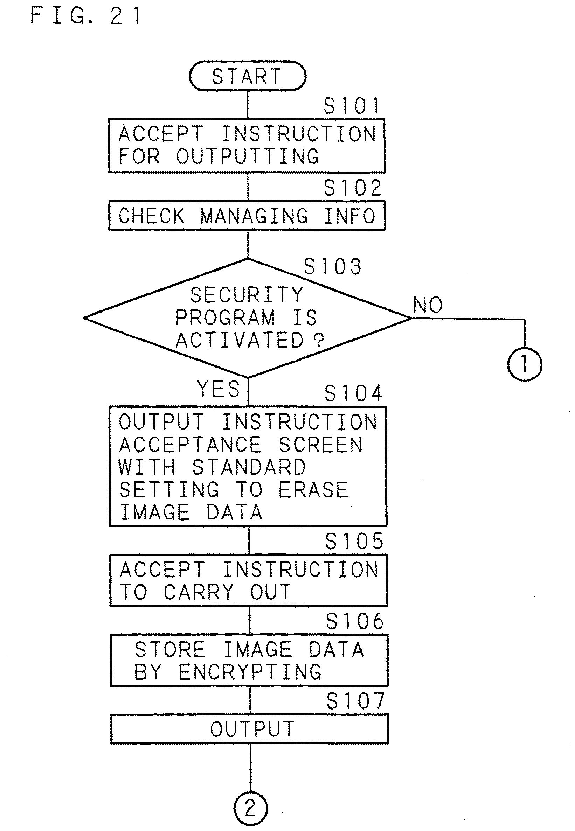

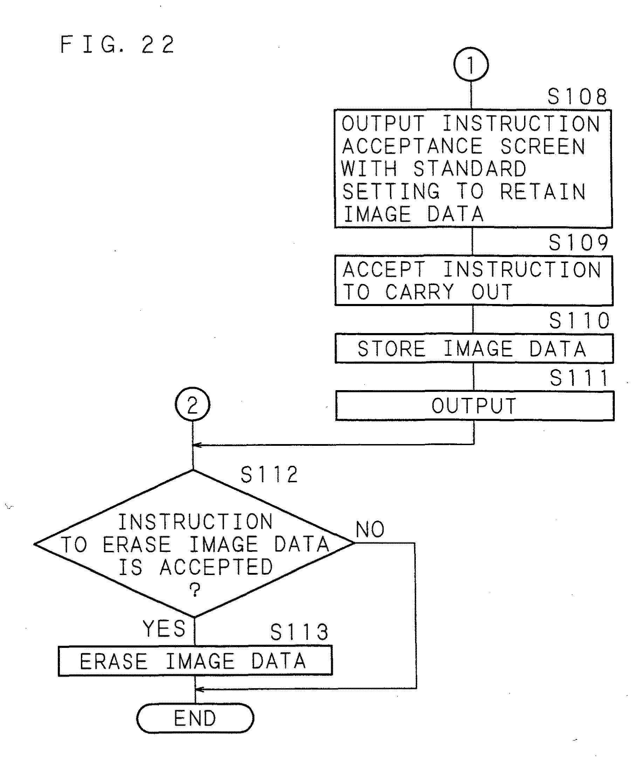

Next, the processing carried out by the image processing apparatus according to the second embodiment of the present invention will be described using a flow chart. FIG. 21 and FIG. 22 are flow charts showing the procedure of the output processing (print outputting) of the image that is carried out by the image processing apparatus according to the second embodiment of the present invention. In the meantime, the following processing is carried out by the control unit 8 in accordance with the control program 15a stored by the ROM 15 and the security program 15b.

Accepting the instruction for copying the image and outputting it for printing by the operating unit 4 (S101), the control unit 8 checks the managing information stored in the managing unit 14 (S102), and it determines whether or not the content of the managing information indicates that the security program 15b is in the state of operation (S103).

When the content of the managing information indicates that the security program 15b is in the state of operation (YES in S103), the control unit 8 outputs an instruction acceptance screen for accepting the instruction to carry out print outputting of the image with erasing of the image data after carrying out print outputting of the image defined as the basic setting to the operating unit 4 so as to display it on the display unit 4b, specifically, on the touch panel 21 (S104).

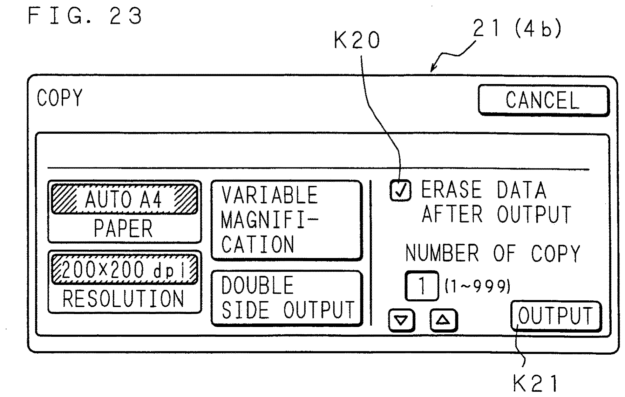

FIG. 23 is a schematic diagram illustrating an instruction acceptance screen of print outputting of the image by copying, which is displayed on the touch panel 21. On this screen, the conditions of print outputting such as a size of the copy paper, a resolution and the number of copies used for print outputting are displayed, and it is possible to change these conditions on the screen. In addition, it is also possible to designate the additional condition such as outputting of the image data on the both sides of the copy paper or variable magnification of the size of the image to be outputted. Further, a check box K20 of "ERASE DATA AFTER OUTPUT" for designating whether or not the image data is erased after outputting is displayed. However, according to this example, since the security program 15b is operated, as shown in FIG. 23, the state that erasing of the image data is designated (the check box K20 is checked) is displayed.

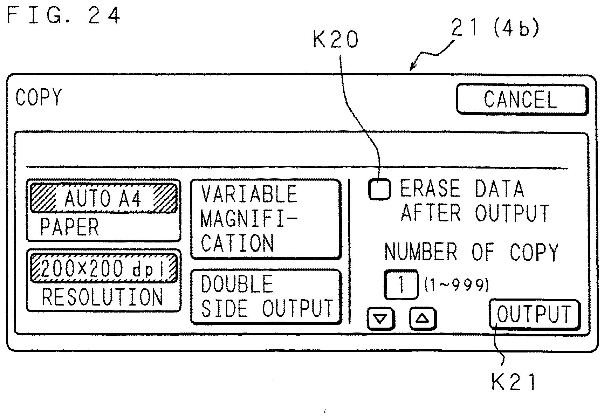

The user confirms the instruction acceptance screen as shown in FIG. 23, and when there is not necessity to store the image data, as checking the check box K20 on the screen, touching an "OUTPUT" key K21, the user inputs the instruction to carry out outputting of the image. On the other hand, when there is necessity to retain the image data after outputting the image without erasing, as shown in FIG. 24, the user releases instruction of erasing of the image data on the instruction acceptance screen. Specifically, releasing checking of the check box K20 and touching an "OUTPUT" key K210, the user inputs the instruction to carry out outputting of the image.

When the user instructs outputting on the instruction acceptance screen as shown in FIG. 23 and FIG. 24, the control unit 8 accepts the instruction to carry out print outputting from the operating unit 4 (S105), and encrypting the image data generated by the image reading unit 2 and temporally stores it in the first storage unit 121 (S106). Then, the control unit 8 reads out the encrypted image data stored in the first storage unit 121 to the image memory 6a to decode it and forms an image from the decoded data in the imaging forming unit 6 to output it for printing (S107).

In step S103, when the content of the managing information stored in the managing unit 14 does not indicate that the security program 15b is not in the state of operation (NO in S103), the control unit 8 outputs the instruction acceptance screen for accepting the instruction to carry out print outputting of the image with retaining of the image data without erasing after carrying out outputting of the image defined as the basic setting to the operating unit 4 so as to display it on the touch panel 21 (S108).

In this case, since the security program 15b is not operated, as shown in FIG. 24, with erasing of the image data not designated (the check box K20 is not checked), the instruction acceptance screen is displayed. When the user designates erasing of the image data on the instruction acceptance screen, specifically, checks the check box K20, it is also possible to instruct erasing of the image data after outputting the image.

When the user turns on the "OUTPUT' key K21 on the instruction acceptance screen as shown in FIG. 23 and FIG. 24 to instruct the output, the control unit 8 accepts the instruction to carry out print outputting from the operating unit 4 (S109), and temporarily stores the image data generated by the image reading unit 2 in the first storage unit 121 (S110). Then, the control unit 8 reads out the image data stored in the first storage unit 121 to the image memory 6a and forms an image in the image forming unit 6 to output it for printing (Sill).

After the processing in step S107 or step S111 is finished, the control unit 8 determines whether or not it accepts the instruction of erasing the image data upon instructing to carry out print outputting (S112). As a result, when the control unit 8 accepts the instruction to erase the image data (YES in S112), it erases the image data stored in the first storage unit 121 (S113), and after that, it terminates the processing. On the other hand, when the control unit 8 does not accept the instruction to erase the image data (NO in S112), it terminates the processing without erasing the image data stored in the first storage unit 121. Thereby, the image data is retained in the first storage unit 121.

In the meantime, not only when copying the image, but also when outputting the image data transmitted from the PC and received by the communication unit 10, or also when outputting the image data received by the communication unit 10 via the facsimile communication, the control unit 8 carries out the processing as same as the above.

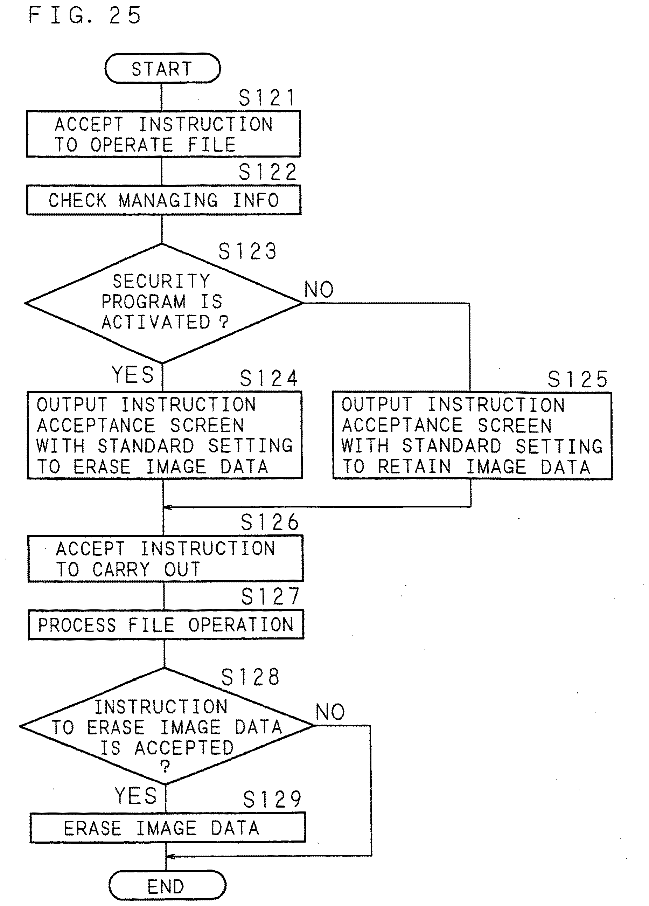

FIG. 25 is a flow chart showing the processing procedure upon operating the image data stored in a storage unit 12 by the image processing apparatus according to the second embodiment of the present invention. In the meantime, the following processing is carried out by the control unit 8 in accordance with the control program 15a and the security program 15b stored by the ROM 15.

When the operating unit 4 accepts the instruction to operate the file of the image data retained by the storage unit 12 (S121), the control unit 8 checks the managing information stored in the managing unit 14 (S122), and it determines whether or not the content of the managing information indicates that the security program 15b is in the state of operation (S123). When the content of the managing information indicates that the security program 15b is in the state of operation (YES in S123), the control unit 8 outputs the instruction acceptance screen for accepting the instruction to carry out the operation of the image data with erasing the image data after carrying out the operation of the image data defined as the basic setting to the operating unit 4 so as to display it on the touch panel 21 (S124).

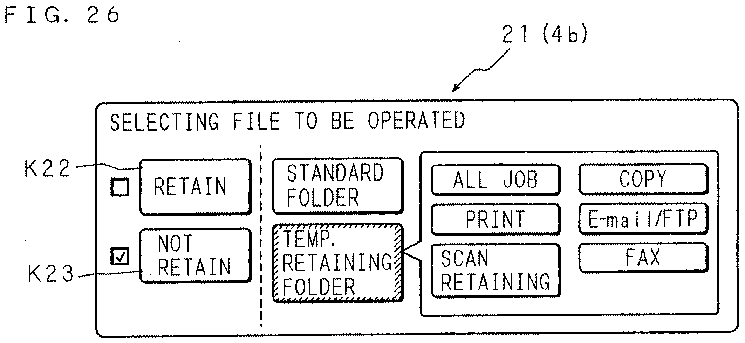

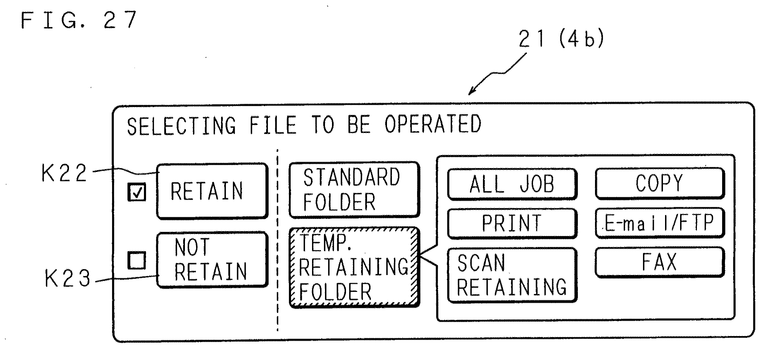

FIG. 26 and FIG. 27 are schematic diagrams illustrating the instruction receiving screen of the image data operation to be displayed on the touch panel 21 of the operating unit 4. At first, as shown in FIG. 26, a retrieving screen for retrieving the file of the image data that the user wants to operate from a standard folder retaining the image data in the first storage unit 121 or a temporary retaining folder retaining the image data in the second storage unit 122 and check boxes K22 and K23 for designating whether or not the file of the image data is retained as it is after operation are displayed on the touch panel 21.

In this case, since the security program 15b is operating, as shown in FIG. 26, the retrieving screen is displayed with the file of the image data designated not to be retained (the check box K23 of "NOT RETAIN" is checked). The user confirms the retrieving screen, and when it is necessary to retain the file of the image data, as shown in FIG. 27, the user inputs the instruction to retain the file of the image data without erasing by designating retaining the file of the image data on the screen (the check box K22 of "RETAIN" is checked).

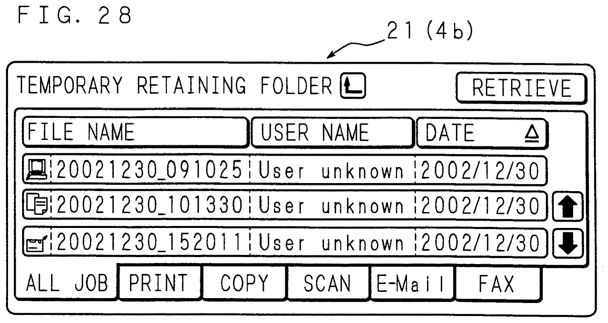

Designating the standard folder or the temporary retaining folder on the retrieving screen, the user can select a processing mode of the image data such as copying or print outputting. When the user selects any processing mode, as shown in FIG. 28, a file list of the image data retained by the storage unit 12 with respect the processing mode selected by the user is displayed on the touch panel 21.

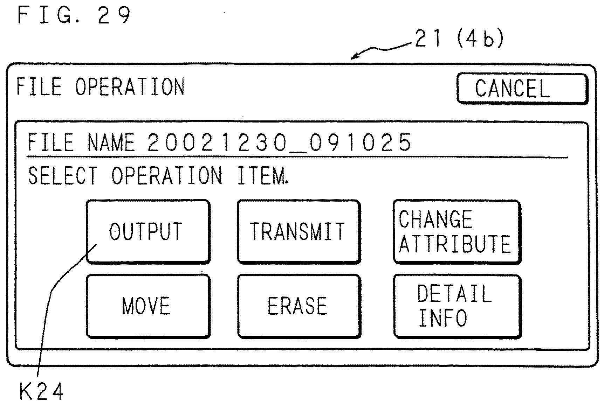

When the user selects one file from the file list shown in FIG. 28, as shown in FIG. 29, a menu screen for operating the image data is displayed on the touch panel 21. Since the menus such as output as an image, move to other folder, transmit to the external PC, erase, change of attributes of the image data, and display the detail information of the image data are displayed on this screen, the user can operate the file of the image data by designating any one from among the menus.

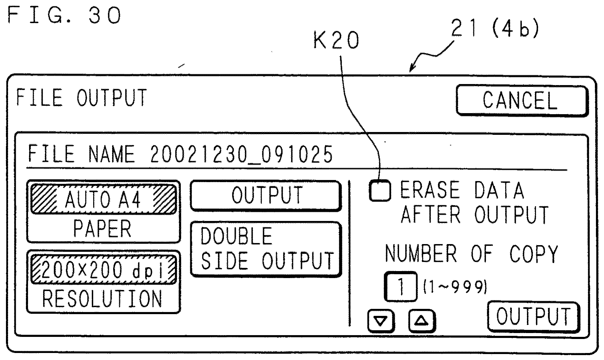

When the user touches the "OUTPUT" key K24 on the screen shown in FIG. 29 to instruct outputting, the instruction acceptance screen for carrying out print outputting as shown in FIG. 30 is displayed on the touch panel 21. Also in this case, the check box K20 to designate whether or not the image data is erased after outputting is displayed. However, when the user already designates to retain the file of the image data, the designation to erase the image data is released, namely, checking of the check box K20 of "ERASE DATA AFTER OUTPUT' is released. In the meantime, at this point of time, it is possible to designate erasing or retaining of the image data.

When the content of the managing information does not indicate that the security program 15b is in the state of operation (NO in S123), the control unit 8 outputs the instruction acceptance screen for accepting the instruction to carry out the operation of the image data with retaining the image data without erasing after carrying out the operation of the image data defined as the basic setting to the operating unit 4 so as to display it on the touch panel 21 (S125). In this case, since the security program 15b is not operated, as shown in FIG. 27, the retrieving screen is outputted with the file of the image data designated to be retained, namely, with the check box K22 of "RETAIN" checked.

After the processing in step S124 or step S125 is finished, when the user instructs outputting on the instruction acceptance screen as shown in FIG. 30 or the like, the control unit 8 accepts the instruction to carry out the image data from the operating unit 4 (S126), and carries out the processing of the file operation (S127). Next, the control unit 8 determines whether or not it accepts the instruction to erase the image data upon instructing to carry out the processing (S128), and when the control unit 8 accepts the instruction to erase the image data (YES in S128), it erases the file of the processed image data from the storage unit 12 (S129), then terminates the processing. On the other hand, when the control unit 8 does not accept the instruction to erase the image data (NO in S128), it terminates the processing as the file of the processed image data is retained in the storage unit 12 without erasing it.

As described in detail above, in the image processing apparatus 1 according to the second embodiment of the present invention, in the case where the security program 15b is operating, it is inhibited in principle to retain the processed image data such as the outputted image data in the storage unit 12. However, the image data that accepts the instruction by the user upon carrying out the processing is retained in the storage unit 12. Thereby, there is no possibility that the image data is retained in the image processing apparatus without the user's conscious of retaining of the image data. Accordingly, it is possible to prevent the image data retained in the image processing apparatus without the user's recognition thereof from being taken out to the outside and being illegally used.

In addition, when the user judges that there is no confidentiality, since the image data that is instructed to be retained in the storage unit 12 is retained in the image processing apparatus 1, it is possible to reuse the image data as same as the conventional case. As a result, according to the image processing apparatus 1 of the second embodiment of the present invention, it is possible to make improvement of the security compatible with convenience of usage of the image data.

### (Third Embodiment)

Next, the third embodiment according to the present invention will be specifically described with reference to the drawings.

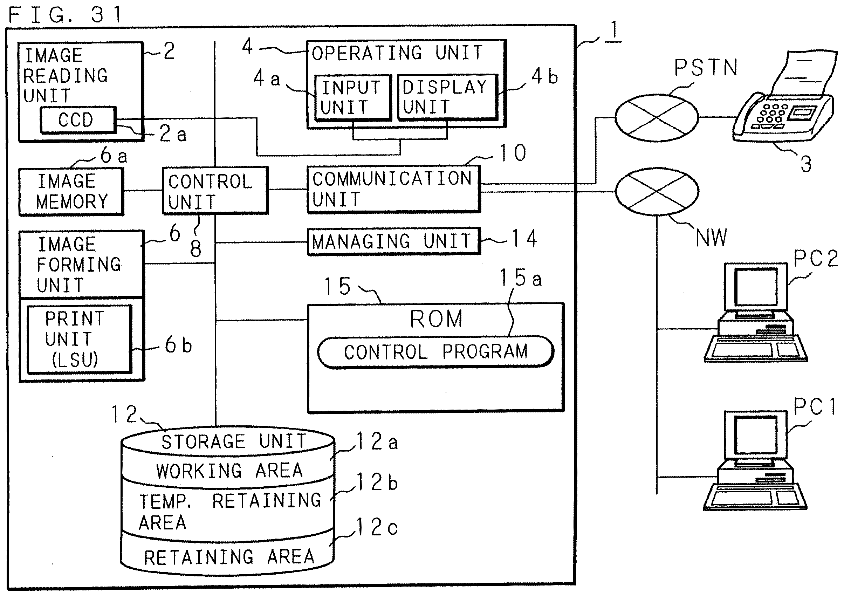

FIG. 31 is a block diagram showing the structural example of hardware of an image processing apparatus (a digital MFP) according to the third embodiment of the present invention. In the meantime, the structural example of the third embodiment shown in this FIG. 31 is different from those of the first and second embodiments shown in the above-described FIG. 1 in that it is not provided with the data security kit 9, the security program 15b is not stored in the ROM 15, and the structure of the storage unit 12 is different. In addition, according to the third embodiment, the operation of the image memory 6a is also different from those of the first and second embodiments. However, other structural elements are the same as those of the first embodiment, so that the explanation thereof is herein omitted.

The storage unit 12 of the image processing apparatus 1 according to the third embodiment has a data retaining area that is logically divided into three, namely, a working area 12a functioning as the temporary storing means for temporally storing the image data to be processed when the image processing apparatus 1 carries out the processing of the image data, a temporary retaining area 12b for temporally retaining the image data to be processed so as to be reused, and a retaining area 12c for retaining the image data for a longer period of time.

The working area 12a temporally stores the image data to be processed when the image processing apparatus 1 carries out the processing of the image data such as outputting the image for printing, transmission of the image data, or reception of the image data or the like and the processed image data is erased after the processing is finished. The temporary storage area 12b retains the processed image data stored in the working area 12a by designation of the user. In the meantime, when much image data are retained and this leads to lack of the storage capacity in the temporary storage area 12b, the image data is sequentially erased from the older data when the new data is retained therein. In the retaining area 12c, for example, a plurality of folders created for each user is registered and each user can retain the image data in a dedicated folder of each user.

Accordingly, the image processing apparatus 1 can reuse the image data retained by the temporary storage area 12b and the retaining area 12c of the storage unit 12 by reading out it.

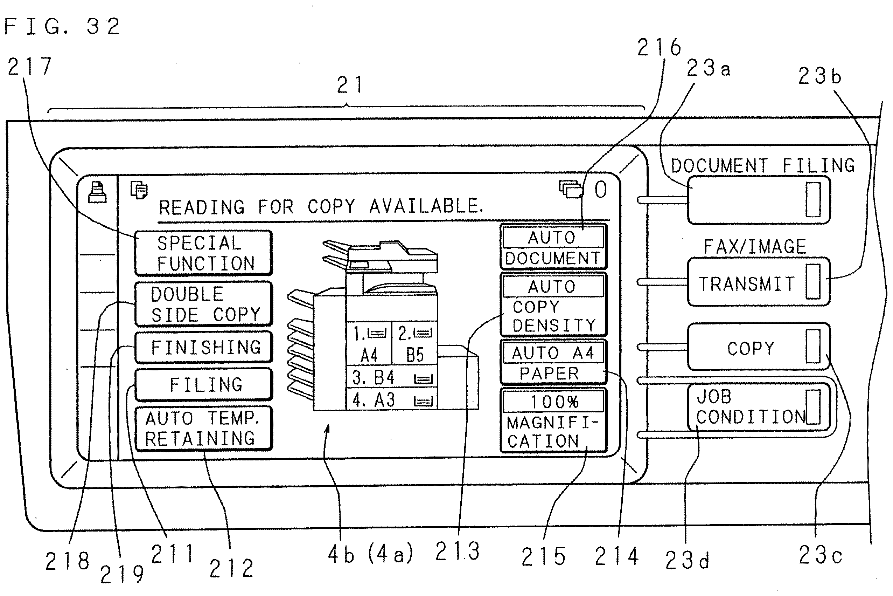

FIG. 32 is a schematic diagram showing a part of an operating unit 4 of the image processing apparatus 1 according to the third embodiment, specifically, the touch panel 2 and the switching keys 23a, 23b, and 23c for each mode. This structure is basically the same as that shown in FIG. 2, however, the display unit 4b, specifically, the content shown on the touch panel 21 is different.

Specifically, as same as the above-described example shown in FIG. 2, the operating unit 4 is provided with the display unit 4b displaying the necessary information, the touch panel 21 serving as the input unit 4a for accepting various instructions from the user, the numeric keypad 22, the "START" key 16 for accepting the instruction to start the processing from the user, the switching keys 23a, 23b, and 23c for each mode, and the "USER SETTING" key 24 or the like. Specifically, the switching key for each mode including the "DOCUMENT FILING" key 23a accepting the instruction to use the image data retained by the storage unit 12, a "FAX/IMAGE TRANSMIT" key 23b for accepting the instruction of transmission of the image data to the outside using the communication unit (modem) 10, the "COPY" key 23c for accepting the instruction of copying, and the "JOB CONDITION" key 23d for accepting the instruction to display the information indicating the processing condition of the image data.

In addition, the display screen of the touch panel 21 (the display unit 4b) shown in FIG. 32 is the operational screen for the copy processing to be displayed when the user operates the "COPY" key 23c. On the right side of this copy operational screen, a "DOCUMENT" key 216 to accept the designation of the copy original document such as a size, a "COPY DENSITY' key 213 to accept the designation of the copy density, a "PAPER" key 214 to accept the designation of the copy paper for recording the copied image, and a "MAGNIFICATION" key 215 for accepting the designation of a copy magnification are displayed, respectively. Each key displays the content designated by the operation (touching each key portion on the touch panel 21) of the user on the upper half of the key.

Further, on the left side of this copy operational screen, a "SPECIAL FUNCTION" key 217 to accept the designation of setting of a special processing condition such as division of the copied image or connection of a plurality of images, a "DOUBLE SIDE COPY" key 218 to accept the designation of the condition of the double side copy, a "FINISHING" key 219 to accept the finishing processing such as stapling or folding the paper, a "FILING" key 211 to accept the instruction for retaining the image data in the retaining area 12c, and an "AUTO TEMP. RETAINING" key 212 to accept the instruction for retaining the image data in the temporary storage area 12b are displayed, respectively. In the meantime, the "FILING" key 211 and the "AUTO TEMP. RETAINING" key 212 function as retaining instruction accepting means according to the third embodiment of the present invention.

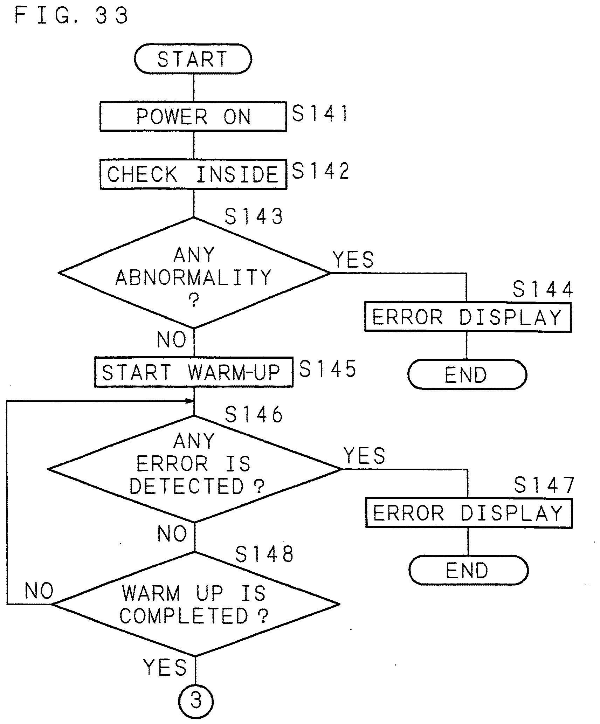

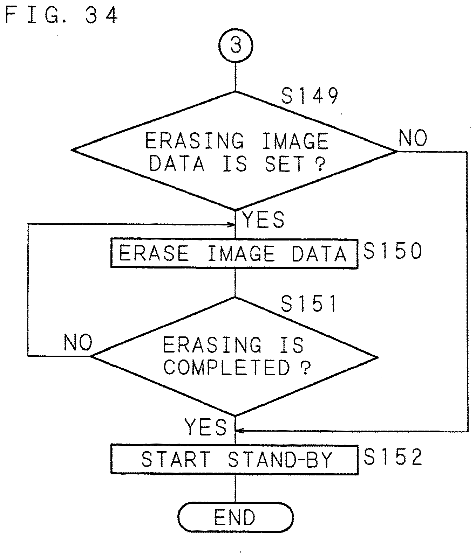

Next, the operation of the image processing apparatus 1 according to the third embodiment of the present invention will be described below with reference to the flow chart and the schematic diagram illustrating the operational screen to be displayed on the touch panel 21 below. FIG. 33 and FIG. 34 are the flow charts for showing the procedure of the processing that are carried out by the image processing apparatus 1 according to the third embodiment of the present invention upon activation of the image processing apparatus 1. In the meantime, the following processing is carried out by the control unit 8 in accordance with the control program 15a stored by the ROM 15.

When the power source of the image processing apparatus 1 is turned on (S141), the control unit 8 carries out the activation processing, namely, checks each device and program inside the image processing apparatus 1 (S142). The control unit 8 determines when abnormality is found by checking the inside thereof (S143), and then, when some abnormalities are found (YES in S143), the control unit 8 displays the error information on the touch panel 21 of the operating unit 4 (S144) to stop the activation processing. When no abnormality is found by checking the inside thereof (NO in S143), the control unit 8 starts the warm-up of the image processing apparatus 1 (S145).

The control unit 8 monitors the detection of the error such that each device inside the apparatus is not activated normally during warm-up (S146), and when the control unit 8 detects the error (YES in S146), it displays the error information on the touch panel 21 of the operating unit 4 (S147) to stop the activation processing. When no error is detected (NO in S146), the control unit 8 determines whether or not warm-up is completed (S148), and when warm-up is not completed (NO in S148), returning the processing to step S146, it continues the processing to monitor the detection of the error.

When no error is detected and warm-up is completed (YES in S148), the control unit 8 determines whether or not the erasing of the image data upon activation is set (S149). When the erasing of the image data upon activation is set (YES in S149), the control unit 8 erases the image data stored in the working area 12a and the temporary storage area 12b of the storage unit 12 (S150). However, in this case, the image data retained in the retaining area 12c is not erased. Next, the control unit 8 determines whether or not erasing of the image data to be erased is completed (S151), and when it is not completed (NO in S151), returning the processing to step S150, it continues the erasing of the image data.

When the erasing of the image data upon activation is not set in step S149 (NO in S149) or when the erasing of the image data is completed in step S151 (YES in S151), the control unit 8 starts standing by of accept of the processing instruction (S152) to terminate the processing upon activation. In the meantime, it is possible to set the erasing of the image data upon activation when the operating unit 4 accepts the operation by the user.

The managing unit 14 stores standard setting that has been determined in advance with respect to a plurality of processing conditions of the image data and functions as condition storing means. In the meantime, under the standard setting, it is set so as to prohibit the image data applied with the processing such as copying from retained in the temporary storage area 12b and the retaining area 12c of the storage unit 12. The processing condition to set the condition when this processed image data is retained in the temporary storage area 12b and the retaining area 12c of the storage unit 12 is referred to as a retaining processing condition.

Therefore, in the case where the image processing apparatus 1 processes the image data in accordance with the processing condition of the standard setting stored by the managing unit 14, the image data to be processed is temporally stored in the working area 12a but it is erased after the processing is terminated.

In the case of accepting the instruction to change the setting of the processing condition by the user from the operating unit 4, the control unit 8 functions as condition changing means, and it changes the processing condition of the image data from the standard setting into the setting by the user. Thereby, the operating unit 4 can accept the instruction (retaining instruction) for retaining the image data in the temporary storage area 12b or the retaining area 12c of the storage unit 12. In other words, it is also possible to change the setting of the retaining processing condition from the standard setting.

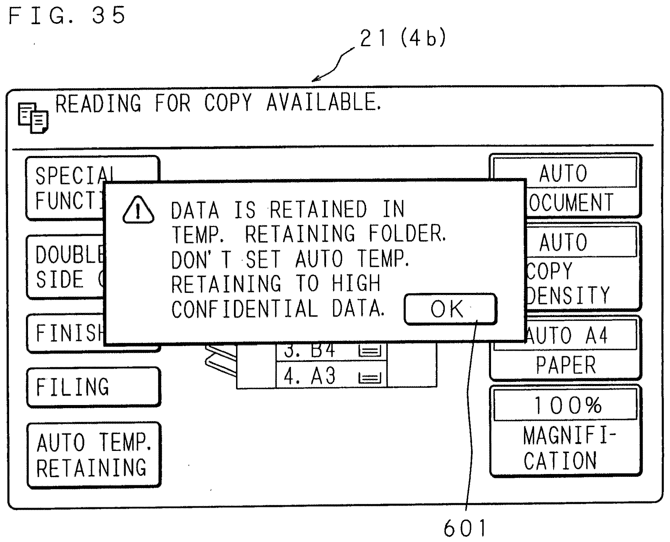

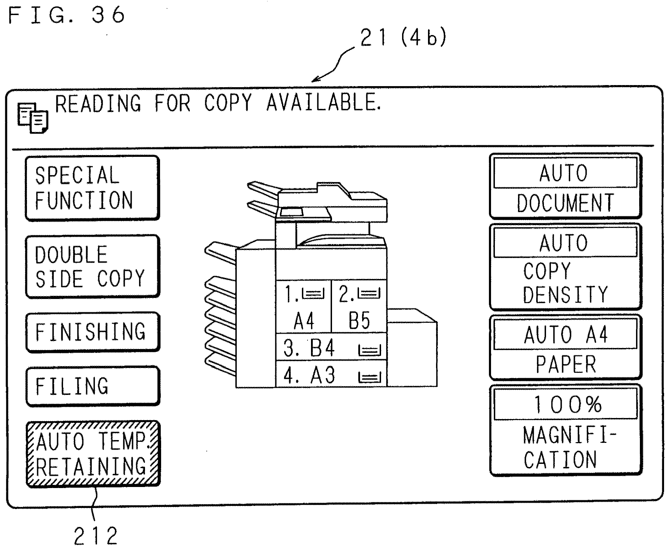

FIG. 35 and FIG. 36 are schematic diagrams illustrating the operational screen to be displayed on the touch panel 21 of the operating unit 4 when the image data is instructed to be retained in the temporary retaining area 12b. When the user touches the "AUTO TEMP. RETAINING" key 212 on the operational screen of the touch panel 21 shown in FIG. 32, a message to make the user to confirm that the processed image data is retained in the temporary retaining folder is displayed on the touch panel 21 as shown in FIG. 35. In the meantime, this temporary retaining folder is a folder corresponding to the temporary retaining area 12b.

When the user touches an "OK" key 601 for confirmation on the touch panel 21 shown in FIG. 35, the operational screen showing that an "AUTO TEMP. RETAINING" key 212 is selected is displayed by reversing display on the touch panel 21 as shown in FIG. 36. Thus, by selecting the "AUTO TEMP. RETAINING" key 212, it is indicated that retaining of the image data in the temporary retaining area 12b is instructed.

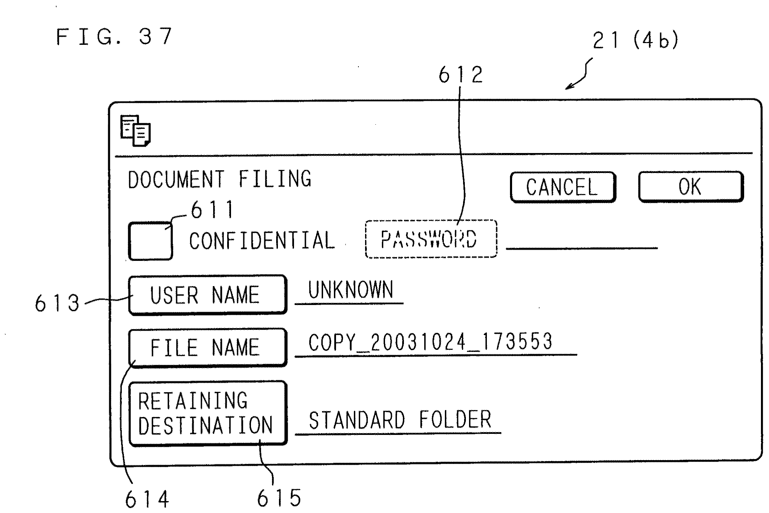

FIG. 37 to FIG. 44 are schematic diagrams illustrating the operational screen to be displayed on the touch panel 21 of the operating unit 4 when retaining of the image data in the retaining area 12c is instructed.

When the user touches the "FILING" key 211 on the operational screen of the touch panel 21, on the touch panel 21, the operational screen for accepting the retaining condition in the retaining area 12c as shown in FIG. 37 is displayed. On this operational screen shown in FIG. 37, a check box of "CONFIDENTIAL" 611 for accepting the designation whether or not the image data is to be protected by a password, a "PASSWORD" key 612 for accepting the designation of the password, a "USER NAME" key 613 for accepting the designation of the user, a "FILE NAME" key 614 for accepting the designation of a file name of the image data, and a "RETAINING DESTINATION" key 615 for accepting the designation of a folder name in the retaining area 12c for retaining the image data are displayed, respectively.

Just after the user touches the "FILING" key 211, the standard setting is displayed as shown in FIG. 37. Under this standard setting, the check box of "CONFIDENTIAL" 611 is not checked. Under this condition, since the password is not necessary, the "PASSWORD" key 612 is made into the unavailable condition as represented by a broken line. In addition, as a user name, "UNKNOWN", as a file name, that automatically made by a time or the like, and as a retaining destination, a standard folder are designated respectively under the standard setting.

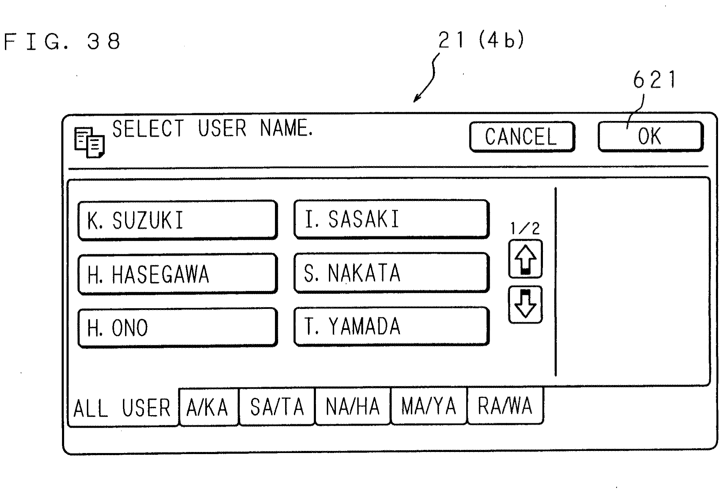

When the user touches the "USER NAME" key 613 on the operational screen shown in FIG. 37, a selection screen of the user name as shown in FIG. 38 is displayed on the touch panel 21. Since user names registered in advance are displayed on this screen, when the user designates any user name and touches an "OK" key 621, the user name is designated.

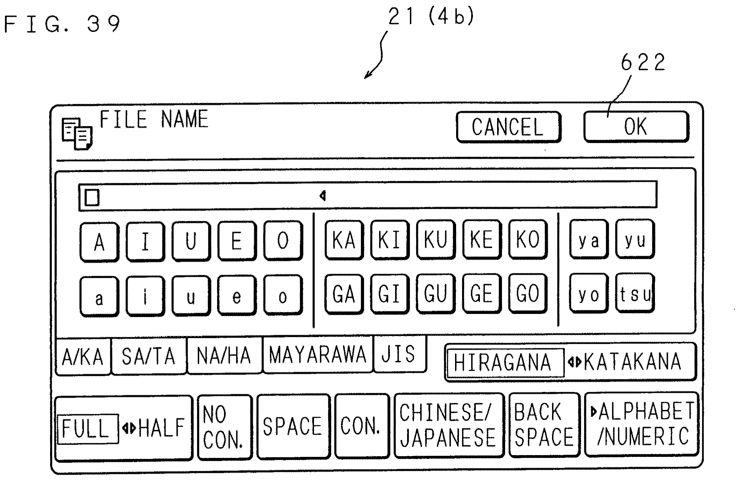

When the user touches the "FILE NAME" key 614 on the operational screen shown in FIG. 37, on the touch panel 21, an input screen of the file name is displayed as shown in FIG. 39. Since a plurality of input keys for inputting characters such as hiragana or alphabet is displayed on this input screen, the user can input an optional file name by touching each input key. Then, after the user inputs the file name on the operational screen shown in FIG. 37, the file name is designated by touching the "OK" key 622 after the user inputs the file name on the operational screen shown in FIG. 37.

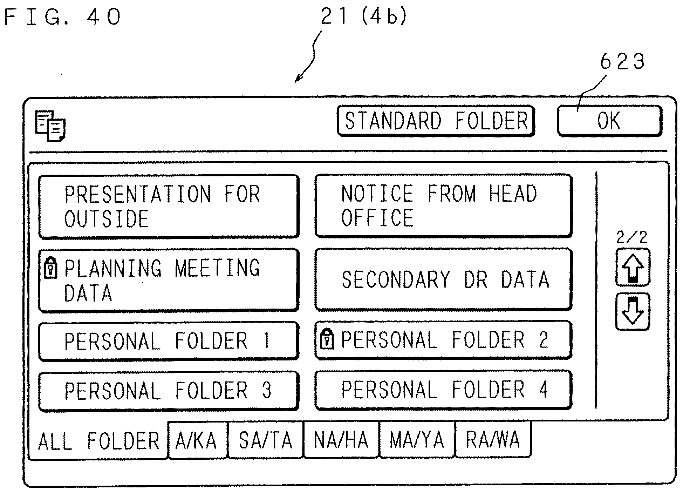

When the user touches the "RETAINING DESTINATION" key 615 on the operational screen shown in FIG. 37, on the touch panel 21, the selection screen of the folder as shown in FIG. 40 is displayed. Since folder names registered in advance are displayed on this screen, when the user touches an "OK" key 623 while designating any folder name, the folder of the retaining destination of the image data is designated. In the meantime, in FIG. 40, the folder to whose folder name a key mark is added is protected by a password, and in order to designate this folder, it is necessary to input the password.

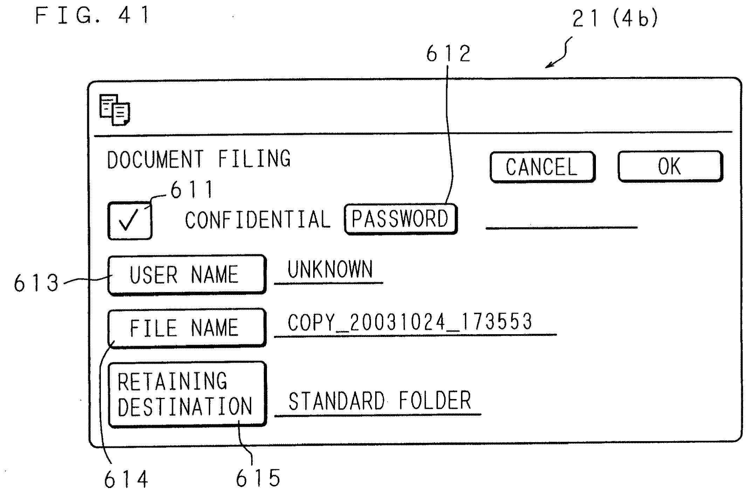

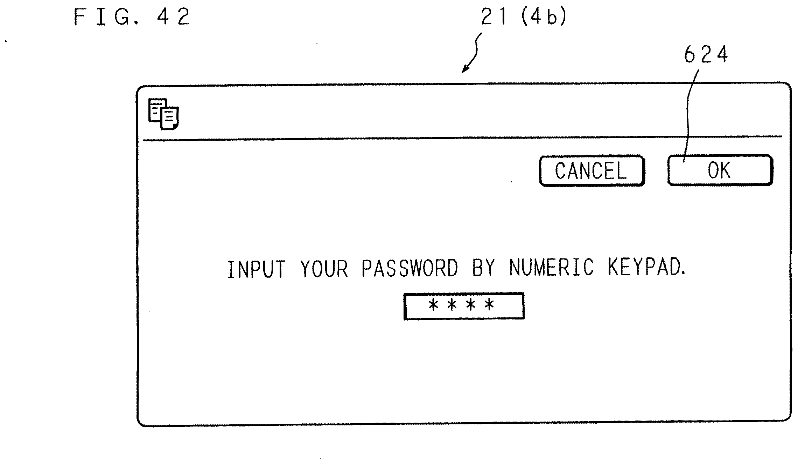

When the user checks the check box of "CONFIDENTIAL" 611 on the operational screen shown in FIG. 37 by touching this check box, on the touch panel 21, the operational screen as shown in FIG. 41 such that the "PASSWORD" key 612 is available is displayed on the touch panel 21. When the user touches the "PASSWORD" key 612 shown in FIG. 41, on the touch panel 21, the input screen of the password as shown in FIG. 42 is displayed. When the user touches an "OK" key 624 after inputting the password on this screen using the numeric keypad 22, the password is accepted.

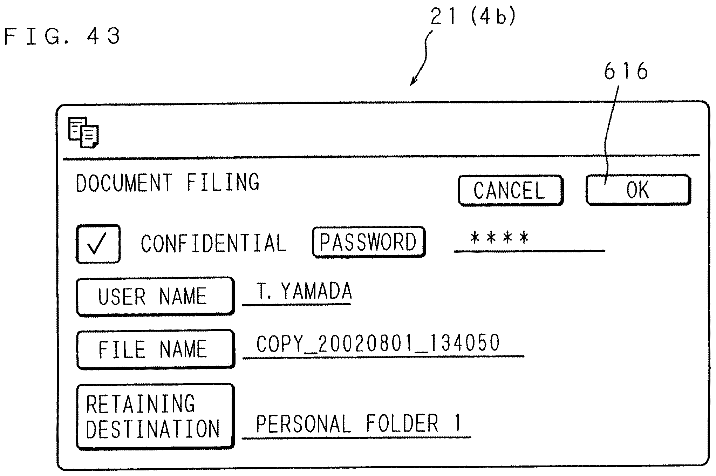

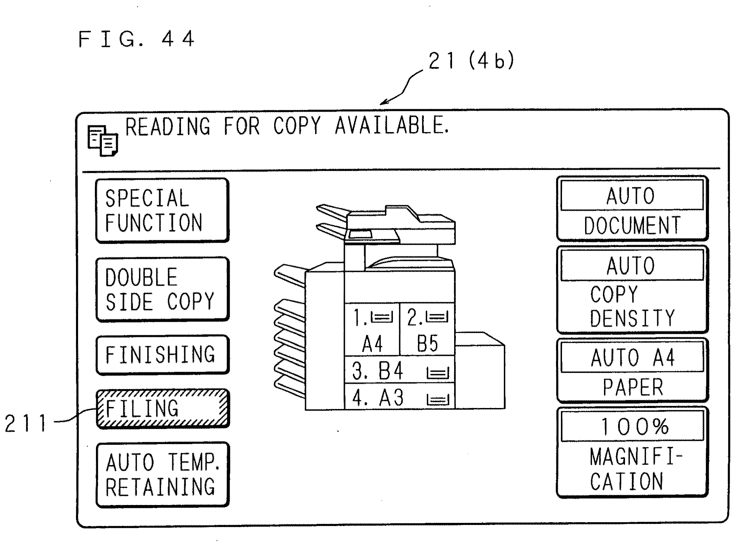

In the case where the retaining condition necessary for retaining the image data in the retaining area 12c is accepted, on the touch panel 21, the operational screen as shown in FIG. 43 having the password, the user name, the file name, and the folder name of the retaining destination are designated is displayed. When the user touches the "OK" key 616 on the operational screen shown in FIG. 43, the operational screen showing that the "FILING" key 211 is selected by reverse display is displayed on the touch panel 21 as shown in FIG. 44. Thus, by selecting the "FILING" key 211, it is indicated that retaining of the image data in the retaining area 12c is instructed.

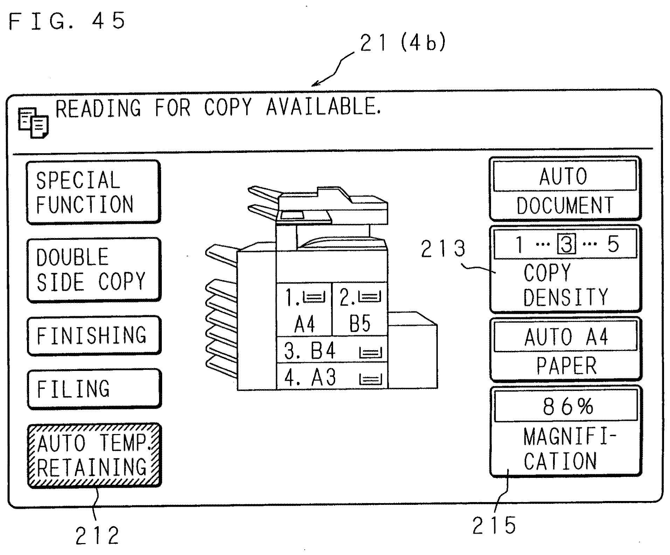

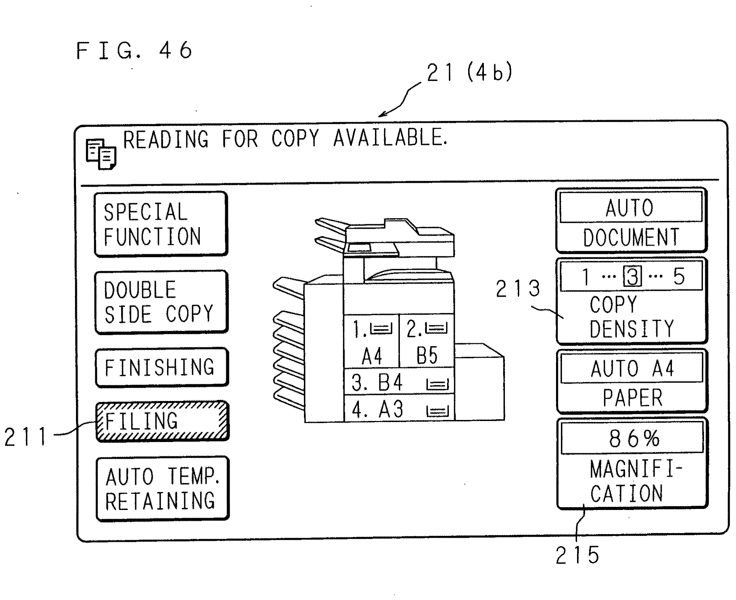

When the user touches other keys on the operational screen shown in FIG. 36 or FIG. 44, it is possible to designate setting of other processing conditions such as a copy density and a copy magnification. FIG. 45 and FIG. 46 are schematic diagrams illustrating the operational screen to be displayed on the touch panel 21 of the operating unit 4 when changing of setting of the processing condition of the image data is completed. Further, FIG. 45 shows the operational screen when the "AUTO TEMP. RETAINING" key 212 is designated, and FIG. 46 shows the operational screen when the "FILING" key 211 is designated.

On the operational screens shown in FIG. 45 and FIG. 46, changing of the copy density is designated by the "COPY DENSITY" key 213 is designated, and changing of the copy magnification is designated by the "MAGNIFICATION" key 215. Under this condition, when the user turns on the "START" key 16, the image processing apparatus 1 carries out the copying processing of the image under the designated processing condition.

In the meantime, the above changing of the processing condition also can be carried out upon processing of the facsimile transmission or print outputting. Under the standard setting of the retaining processing condition upon processing of the facsimile transmission or processing of print outputting, the processed image data is not set to be retained in the storage unit 12 as same as the case of copying processing. In the case of the facsimile transmission, when the user operates the "FAX/IMAGE TRANSMIT" key 23b of the operating unit 4 shown in FIG. 32, on the touch panel 21, the operational screen for the facsimile transmission as same as the copying processing is displayed, and the image processing apparatus 1 accepts changing of setting of the retaining processing condition. In addition, in the case of print outputting, when the personal computer PC1 or PC2 as the information processing apparatus transmits the image data to the image processing apparatus 1, it is possible to accept on the screen of a printer driver the instruction to retain the image data in the temporary storage area 12b and the retaining area 12c. The personal computer PC1 or PC2 transmits the accepted information of the retaining instruction to the image processing apparatus 1 via the network NW together with the image data. In accordance with the information received from a PC as the information processing apparatus, the control unit 8 of the image processing apparatus 1 changes setting of the retaining processing condition.

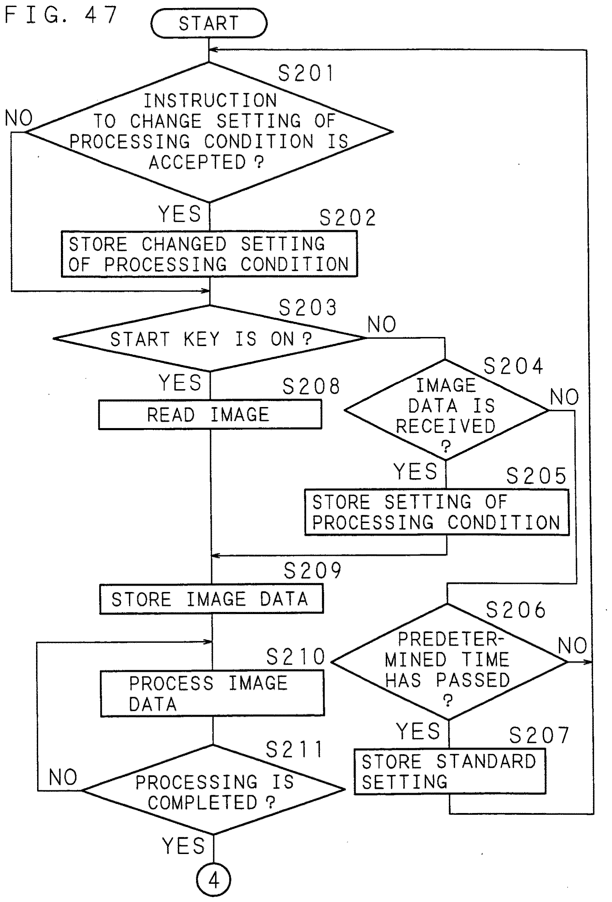

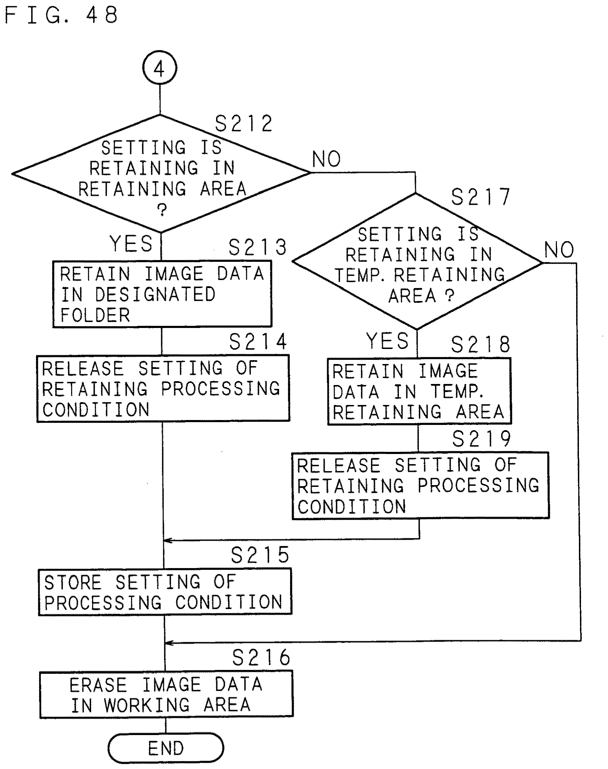

FIG. 47 and FIG. 48 are flow charts showing the procedure of the image processing to be carried out by the image processing apparatus according to the third embodiment of the present invention. The following processing may be carried out by the control unit 8 of the image processing apparatus 1 in accordance with the control program 15a stored by the ROM 15.

The managing unit 14 of the image processing apparatus 1 stores setting of a plurality of processing conditions of the image data, and the control unit 8 monitors acceptance of the changing instruction of setting the processing condition according to the above-described methods (S201). When the changing instruction of setting the processing condition is accepted (YES in S201), the control unit 8 stores the changed setting of the processing condition in accordance with the accepted changing instruction in the managing unit 14 (S202). When the control unit 8 does not accept the changing instruction of setting the processing condition in step S201 (NO in S201), or after the processing is finished in step S202, the control unit 8 monitors acceptance of turning on by the user of the "START" key 16 as the start instruction of the copying processing or the facsimile transmission processing (S203).

When turning on of the "START" key 16 is accepted (YES in S203), the control unit 8 makes the image reading unit 2 read the image of the original document (S208). When turning on of the "START" key 16 is not accepted (NO in S203), the control unit 8 monitors whether or not the communication unit 10 receives the image data transmitted from the personal computer PC1 or PC2 as the information processing apparatus (S204). In the case where the communication unit 10 receives the image data (YES in S204), the control unit 8 makes the managing unit 14 store the setting of the processing condition of print outputting that is received together with the image data (S205).

In the case where the image data is not received in step S204 (NO in S204), the control unit 8 determines whether or not a predetermined time has passed from a point of time when the former processing of the image data was carried out (S206). When the predetermined time has not passed (NO in S206), the control unit 8 returns the processing to step S201. When the predetermined time has passed from a point of time when the former processing of the image data was carried out (YES in S206), the control unit 8 makes the managing unit 14 store the standard setting as the setting of the processing condition of the image data by returning setting of all processing conditions into the standard setting (S207), then returns the processing to step S201.

After the processing in step S208 or step S205 is finished, the control unit 8 stores the image data read by the image reading unit 2 or the image data received by the communication unit 10 in the working area 12a of the storage unit 12 (S209), and carries out print outputting of the image in the image forming unit 6 or carries out the processing such as facsimile transmission from the communication unit (modem) 10 (S210). Next, the control unit 8 determines whether the necessary processing of the image data is completed or not (S211). When the processing is not completed (NO in S211), the control unit 8 returns the processing to step S210, and continues the processing of the image data.

In the case where the processing of the image data is completed in step S211 (YES in S211), the control unit 8 determines whether or not the retaining processing condition among a plurality of processing conditions stored by the managing unit 14 is set to retain the image data in the retaining area 12c or not (S212). When the retaining processing condition is set to retain the image data in the retaining area 12c (YES in S212), the control unit 8 retains the image data stored by the working area 12a in the folder of the retaining area 12c that is designated by the processing condition stored by the managing unit 14 (S213). Subsequently, the control unit 8 releases the setting of the retaining processing condition to retain the image data in the retaining area 12c, namely, returns it to the standard setting (S214), and stores the setting of the retaining processing condition after it is returned to the standard setting in the managing unit 14 (S215). Then, the control unit 8 erases the image data stored by the working area 12a of the storage unit 12 (S216), and terminates the processing.

In step S212, in the case where the setting of the retaining processing condition is determined not to retain the image data in the retaining area 12c (NO in S212), the control unit 8 determines whether the setting of the processing condition stored by the managing unit 14 is to retain the image data in the temporary retaining area 12b or not (S217). When the retaining processing condition is not set to retain the image data in the temporary retaining area 12b (NO in S217), the control unit 8 erases the image data stored in the working area 12a of the storage unit 12 (S216), and terminates the processing.

In the case where setting of the retaining processing condition is determined to retain the image data in the working area 12a in S217 (YES in S217), the control unit 8 stores the image data stored in the working area 12a in the temporary retaining area 12b (S218). Next, the control unit 8 releases the setting of the retaining processing condition to retain the image data in the temporary retaining area 12b, namely, returns it to the standard setting (S219), and stores the setting of the retaining processing condition after the setting of retaining is released, namely, it is returned to the standard setting in the managing unit 14 (S215), then erases the image data stored in the working area 12a of the storage unit 12 (S216), and terminates the processing.

According to the above-described processing, the control unit 8 releases the setting of the retaining processing condition to retain the image data in the temporary retaining area 12b or the retaining area 12c after processing the image data, namely, returns it to the standard setting and stores the settings of a plurality of processing conditions that are maintained as they are other than the retaining processing condition to indicate that the image data should be retained or not in the managing unit 14. Under this condition, the control unit 8 stands ready to accept the next processing instruction.

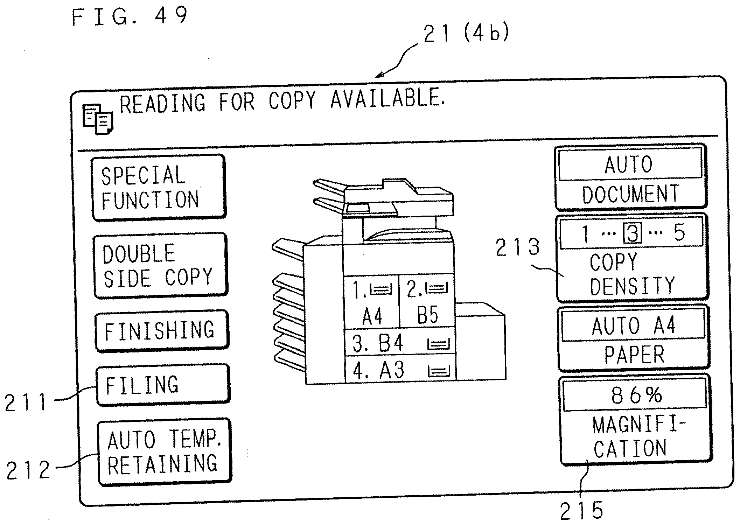

FIG. 49 is a schematic diagram illustrating the display screen to be displayed on the touch panel 21 of the operating unit 4 after the processing of the image data is terminated. On this screen, both of the "FILING" key 211 and the "AUTO TEMP. RETAINING" key 212 are not designated and it means that the processing condition is not set so as to retain the image data. On the contrary, with respect to the "COPY DENSITY" key 213 and the "MAGNIFICATION" key 215, the designation of the copy density and the designation of the magnification are maintained. In other words, it is shown that the settings of the processing conditions other than the retaining processing condition to indicate that the image data should be retained or not are maintained as they are.

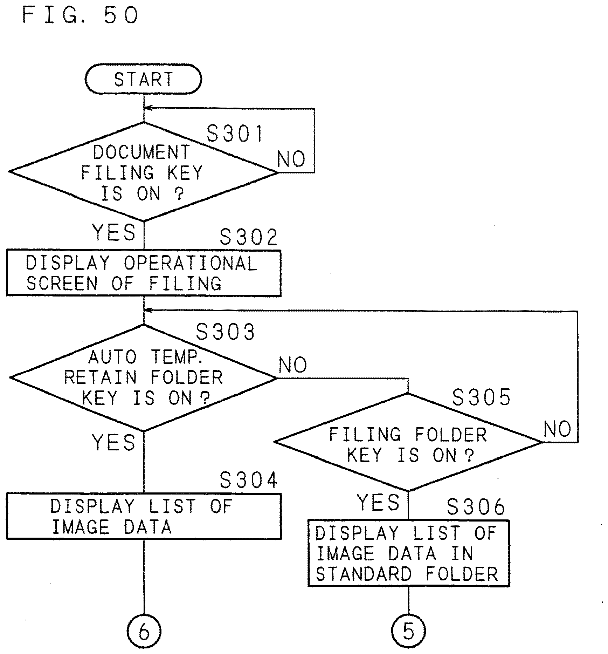

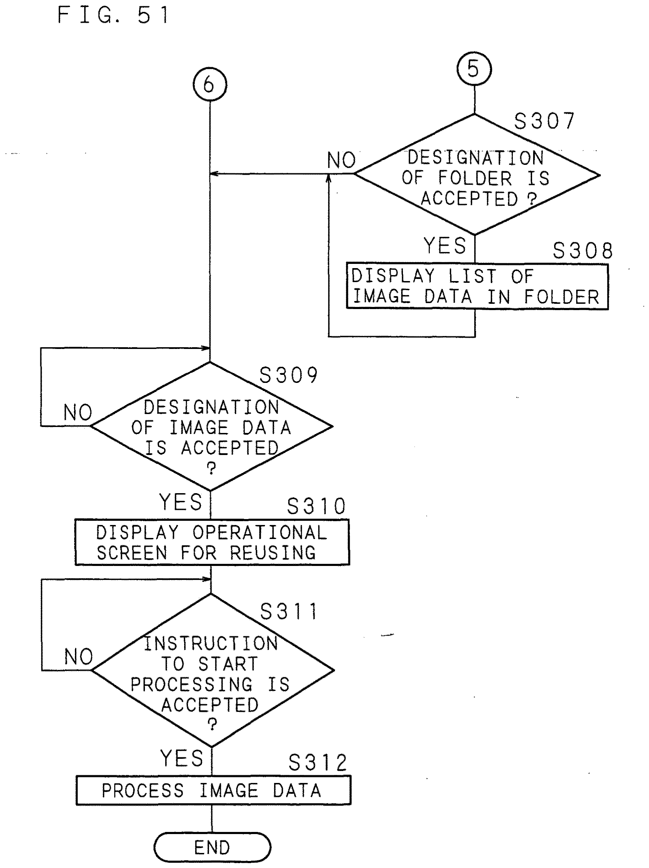

The image processing apparatus 1 can carry out print outputting of the image or carry out the processing such as facsimile transmission by reusing the image data stored by the storage unit 12. FIG. 50 and FIG. 51 are flow charts showing the procedure upon reusing the image data to be carried out by the image processing apparatus 1 according to the third embodiment of the present invention. In the meantime, the following processing are carried out by the control unit 8 of the image processing apparatus 1 in accordance with the control program 15a stored by the ROM 15.

The control unit 8 monitors acceptance of the instruction to start reusing of the image data when the user turns on the "DOCUMENT FILING" key 23a of the operating unit 4 shown in FIG. 32 (S301). When ON of the "DOCUMENT FILING" key 23a is not accepted (NO in S301), the control unit 8 continues to monitor the acceptance of ON of the "DOCUMENT FILING" key 23a. When ON of the "DOCUMENT FILING" key 23a is accepted (YES in S301), the control unit 8 makes the touch panel 21 of the operating unit 4 display the operational screen of filing (S302).

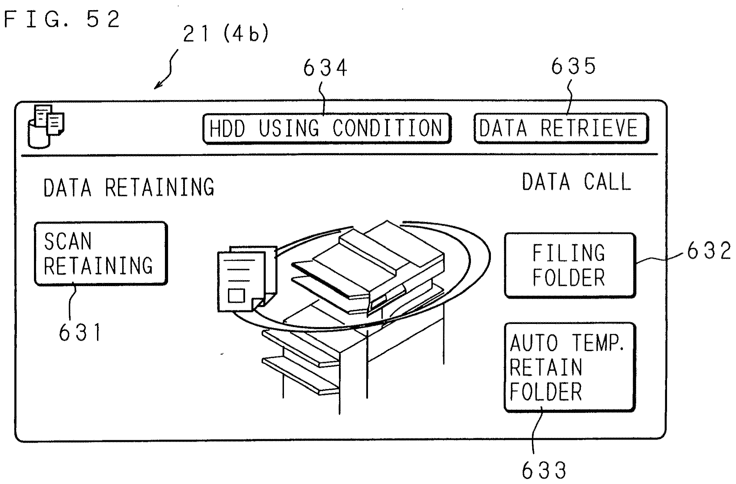

FIG. 52 is a schematic diagram illustrating the operational screen of filing to be displayed on the touch panel 21 of the operating unit 4. On this operational screen of filing, a "SCAN RETAINING" key 631 for accepting the retaining instruction to only retain the image data without carrying out the processing of the image data such as copying or the facsimile transmission is displayed on the touch panel 21. In addition, on the touch panel 21, a "FILING FOLDER" key 632 for accepting the instruction to call out the image data stored by the retaining area 12c and the temporary retaining area 12b of the storage unit 12 and an "AUTO TEMP. RETAIN FOLDER" key 633 are displayed. Further, on the touch panel 21, an "HDD USING CONDITION" key 634 for accepting the instruction to display the information indicating the using situation of the storage unit 12 and a "DATA RETRIEVE" key 635 for accepting the instruction to retrieve the image data to be reused are displayed.

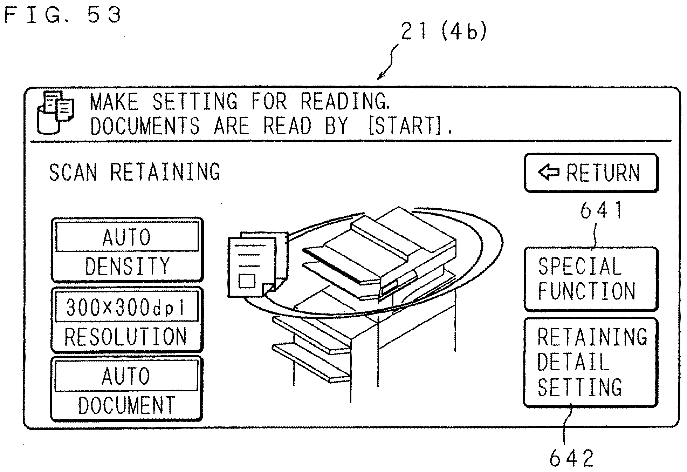

When the user touches the "SCAN RETAINING" key 631 on the operational screen shown in FIG. 52, on the touch panel 21, the operational screen for scan retaining is displayed. FIG. 53 is a schematic diagram illustrating the operational screen of scan retaining to be displayed on the touch panel 21 of the operating unit 4. On the touch panel 21, respective keys for accepting designations of a density of copy, a resolution, and an original document upon reading the image by the image reading unit 2 are displayed. In addition, on the touch panel 21, a "SPECIAL FUNCTION" key 641 for accepting designation of a special processing condition such as division of the read image or connection of a plurality of images and a "RETAINING DETAIL SETTING" key 642 for accepting the necessary setting for retaining the image data such as designation of the file name and designation of the folder of the retaining destination of the image data are displayed. After each condition for retaining the image data is set, when the user turns on the "START" key 16, the image reading unit 2 reads the image and the storage unit 12 stores the image data.

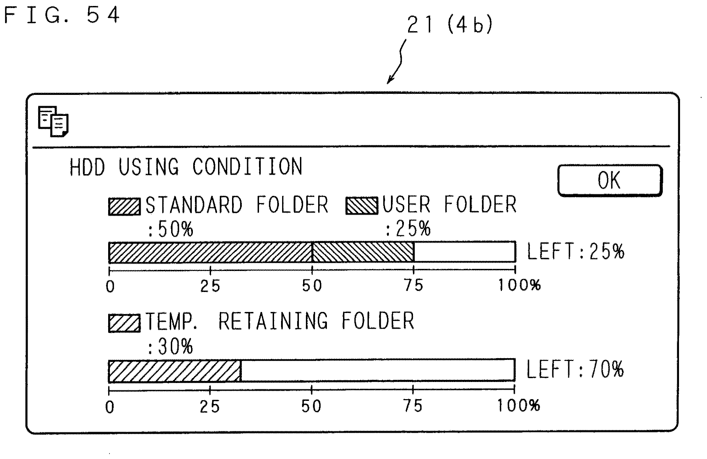

When the user touches the "HDD USING CONDITION" key 634 on the operational screen shown in FIG. 52, on the touch panel 21, the using situation of the storage unit 12 is displayed. FIG. 54 is a schematic diagram illustrating the display screen displaying the using situation of the storage unit 12. On this display screen, an occupation ratio of a using area and a vacant area of the retaining area 12c including a standard folder and a user folder is displayed on the touch panel 21. In addition, on the touch panel 21, an occupation ratio of a using area and a vacant area of the temporary retaining means 12b including the temporary retaining folder is displayed in the same way.

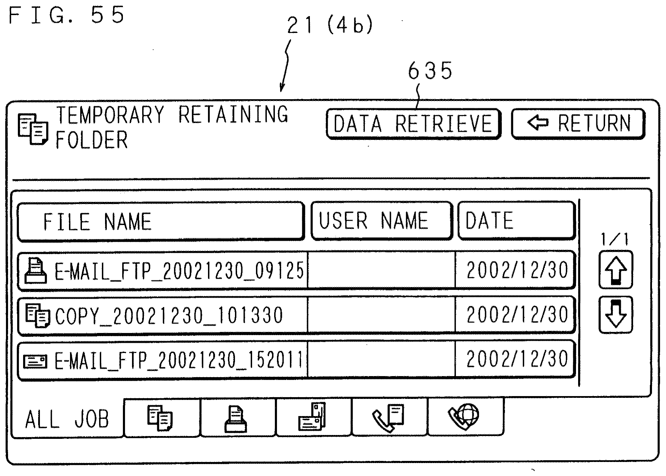

Subsequently, the control unit 8 monitors acceptance of ON of the "AUTO TEMP. RETAIN FOLDER" key 633 when the user touches it on the operational screen shown in FIG. 52 (S303). When ON of the "AUTO TEMP. RETAIN FOLDER" key 633 is accepted (YES in S303), the control unit 8 displays, on the touch panel 21 of the operating unit 4, a list of the image data stored by the temporary retaining area 12b of the storage unit 12 in the temporary retaining folder (S304). FIG. 55 is a schematic diagram illustrating a list display screen of the image data in a temporary retaining folder to be displayed on the touch panel 21 of the operating unit 4. On this screen, a list of the image data to be specified by the information such as the file name, the user name, and the date is displayed. When the user touches the display portion of each file on this display screen, the image data to be reused is designated.

In step S303, in the case where ON of the "AUTO TEMP. RETAIN FOLDER" key 633 is not accepted in step S303 (NO in S303), the control unit 8 monitors acceptance of ON of the "FILING FOLDER" key 632 when the user touches it on the operational screen shown in FIG. 52 (S305). When ON of the "FILING FOLDER" key 632 is not accepted (NO in S305), the control unit 8 returns the processing to step S303.

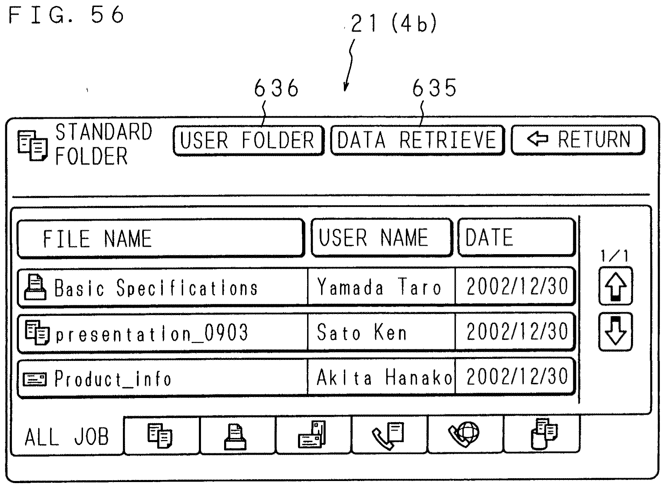

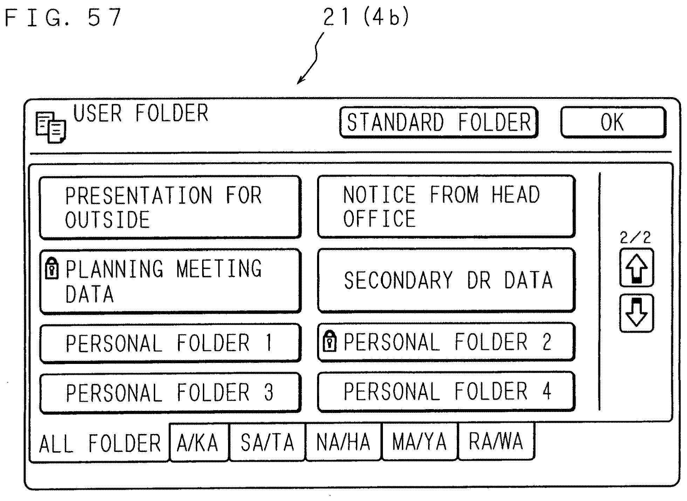

FIG. 56 to FIG. 58 are schematic diagrams illustrating the list display screen of the image data stored by the retaining area 12c of the storage unit 12 to be displayed on the touch panel 21 of the operating unit 4. When ON of the "FILING FOLDER" key 632 is accepted (YES in S305), the control unit 8 displays, on the touch panel 21 of the operating unit 4, the list of the image data stored by the retaining area 12c of the storage unit 12 in the standard folder (S306). FIG. 56 is a schematic diagram illustrating the list display screen of the image data in the standard folder, and on this list display screen, the list of the image data to be specified by the information such as the file name, the user name, and the date is displayed.

On the list display screen in the standard folder, further, a "USER FOLDER" key 636 for accepting the folder other than the standard folder and a "DATA RETRIEVE" key 635 are displayed. When the user touches the "USER FOLDER" key 636 on the list display screen shown in FIG. 56, on the touch panel 21, a list of the folders included in the retaining area 12c other than the standard folder is displayed. When the user touches the displayed portion of each folder on this display screen, the folder is designated.

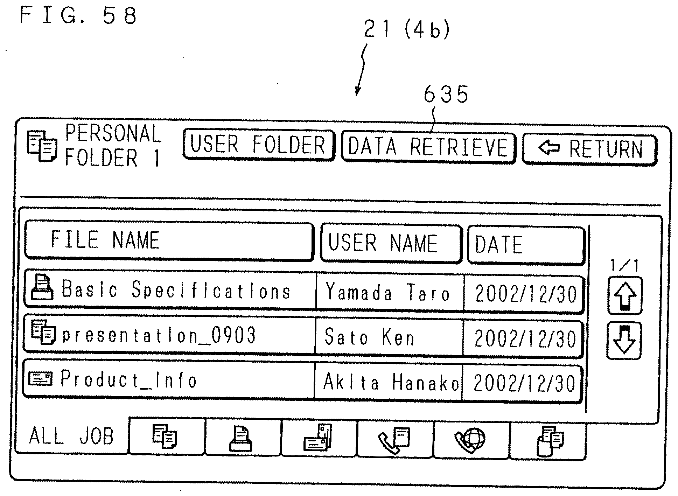

Next, the control unit 8 monitors the acceptance of the folder other than the standard folder (S307). Then, in the case where the control unit 8 accepts the designation of the folder is accepted (YES in S307), the control unit 8 displays the list of the image data in the designated folder on the touch panel 21 of the operating unit 4 (S308). FIG. 58 is a schematic diagram illustrating the list display screen of the image data in the designated folder, and it displays the list of the image data stored by the retaining area 12c in the folder.

When the processing in step S304 is finished, in the case where the designation of the folder is not accepted in step S307 (NO in S307) or when the processing in step S308 is finished, the control unit 8 monitors the acceptance of the designation of the image data when the user touches the file on the list display screen (S309). When the designation of the image data is not accepted (NO in S309), the control unit 8 continues to monitor the acceptance of the designation of the image data, and when the designation of the image data is accepted (YES in S309), the control unit 8 displays the operational screen for reusing the designated image data on the touch panel 21 (S310).

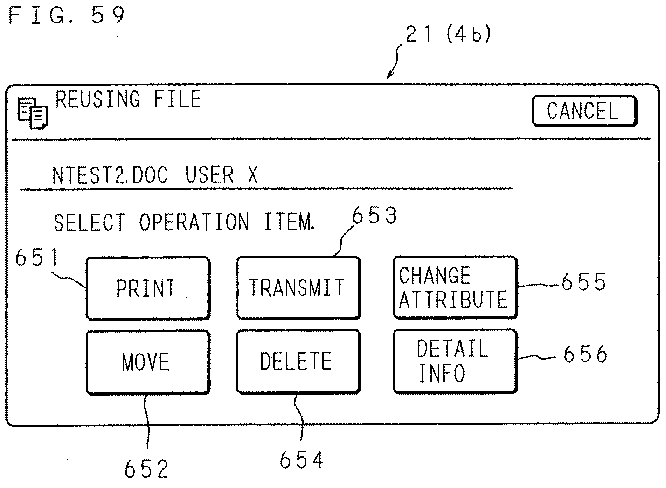

FIG. 59 is a schematic diagram illustrating the operational screen for reusing the image data to be displayed on the touch panel 21 of the operating unit 4. In the operational screen for reusing the image data, the file name of the selected image data is displayed on the touch panel 21, and further, a "PRINT" key 651 for accepting the instruction to output the image for printing, a "MOVE" key 652 for accepting the instruction to move the image data between the folders, a "TRANSMIT" key 653 for accepting the instruction to transmit the image data to the PC as the information processing apparatus or the facsimile apparatus 3, an "ERASE" key 654 for accepting the instruction to erase the image data from the storage unit 12, an "CHANGE ATTRIBUTE" key 655 for accepting the instruction to change the attribute whether the image data is protected by the password or not, and a "DETAILED INFO" key 656 for accepting the instruction to display more detailed information related to the image data are respectively displayed on the touch panel 21.

When the user touches the "PRINT" key 651, the operational screen for accepting the setting of the processing conditions such as the number of printing is displayed on the touch panel 21 and the control unit 8 accepts the setting of the processing conditions. In addition, when the user touches the "MOVE" key 652, on the touch panel 21, the operational screen for accepting the designation of the folder at the moving destination is displayed and the control unit 8 accepts the designation of the folder. In addition, when the user touches the "TRANSMIT" key 653, on the touch panel 21, the operational screen for accepting the designation of the transmission designation is displayed and the control unit 8 accepts the designation of the transmission destination. In addition, when the user touches the "ERASE" key 654, on the touch panel 21, the operational screen for accepting confirmation of erasing is displayed. In addition, when the user touches the "CHANGE ATTRIBUTE" key 655, on the touch panel 21, the operational screen for accepting the content of changing the attribute of the image data is displayed and the control unit 8 accepts the content of changing. In addition, when the user touches the "DETAILED INFO" key 656, on the touch panel 21, the display screen for displaying the detailed information of the image data is displayed.

The control unit 8 accepts the setting of the processing condition such as outputting of the image for printing or the transmission thereof, and monitors accepting of the instruction to start the processing when the user turns on the "START" key 16 of the operating unit 4 (S311). When the instruction to start the processing is not accepted (NO in S311), the control unit 8 continues to monitor the acceptance of the instruction to start the processing. When the instruction to start the processing is accepted (YES in S311), the control unit 8 carries out the processing such as outputting of the image for printing or the transmission of the image data (S312), and terminates the processing of reusing the image data.

In the meantime, upon designation of the image data to be reused, the processing to designate the image is carried out after retrieving the image data. When the user touches the "DATA RETRIEVE" key 635 on the operational screens shown in FIG. 52, FIG. 55, FIG. 56 or FIG. 58, on the touch panel 21, the operational screen for retrieving the image data is displayed.

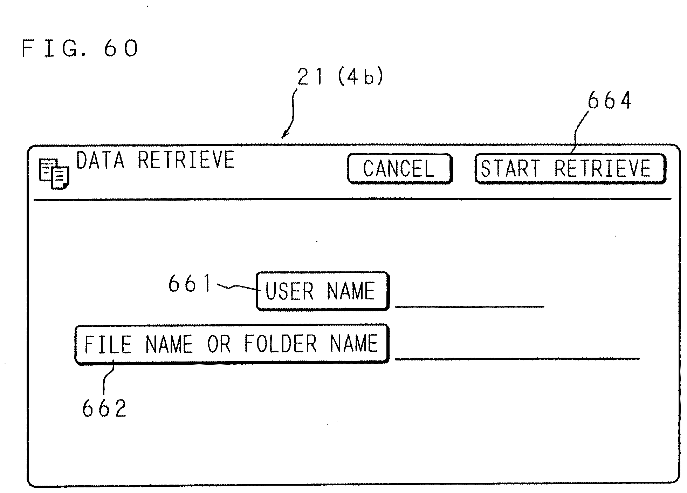

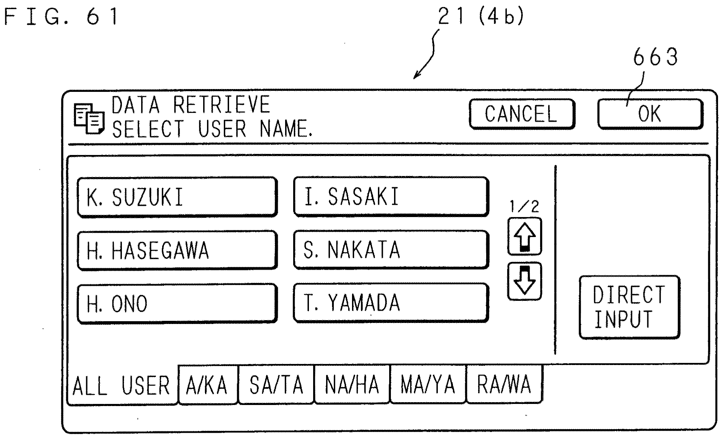

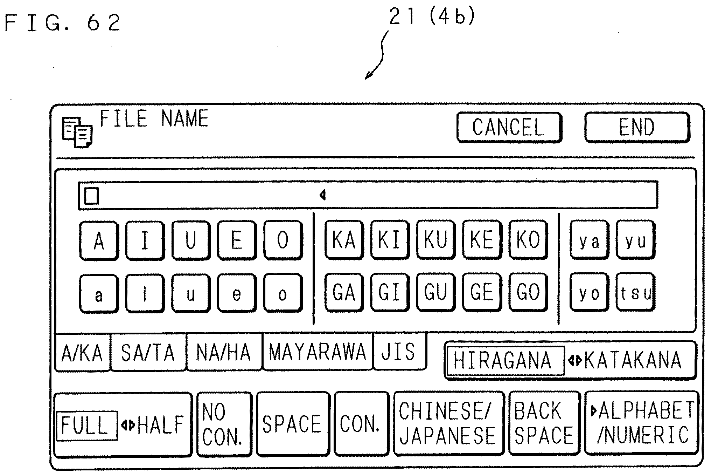

FIG. 60 to FIG. 63 are schematic diagrams illustrating the operational screen for retrieving the image data to be displayed on the touch panel 21 of the operating unit 4. At first, as shown in FIG. 60, the operational screen on which a "USER NAME" key 661 for accepting the designation of the user name as a retrieving condition and a "FILE NAME OR FOLDER NAME" key 662 for accepting the designation of the file name or the folder name are displayed is displayed. When the user touches the "USER NAME" key 661, on the touch panel 21, a screen for selecting the user name as shown in FIG. 61 is displayed. On this screen, user names having been registered in advance are displayed, and when the user designates any user name and touches an "OK" key 663, the user name as a retrieving condition is designated. When the user touches a "FILE NAME OR FOLDER NAME" key 662, on the touch panel 21, the input screen of the file name or the folder name as shown in FIG. 62 is displayed. According to such an input screen, on the touch panel 21, a plurality of input keys for inputting a character is displayed, the file name or the folder name are inputted when the user touches each input key, and the file name or the folder name are designated as the retrieving condition.

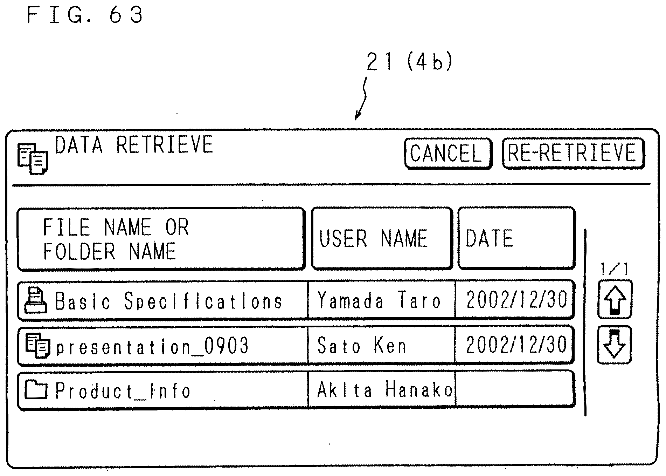

When the user touches a "START RETRIEVE" key 664 on the operational screen shown in FIG. 60 with the retrieving condition designated, the control unit 8 retrieves the image data stored by the temporary retaining area 12b and the retaining area 12c of the storage unit 12 to extract the image data corresponding to the retrieving condition. Subsequently, the control unit 8 displays the display screen displaying the retrieving result on the touch panel 21 of the operating unit 4. FIG. 63 is a schematic diagram illustrating the display screen of the retrieving result, and a list of the files or the folders of the image data extracted in accordance with the retrieving condition is displayed on this display screen. When the user touches the file name on this display screen, the image data to be reused is designated.

As described above in detail, the image processing apparatus according to the third embodiment of the present invention processes the image data in accordance with the set plural processing conditions, retains the processed image data when the retaining processing condition to indicate whether the image data should be retained or not is to retain the image data, and does not retain the image data when it is set not to retain the image data.

In addition, upon accepting the image data to be processed, the apparatus accepts the instruction to retain the image data, and after the processing of the image data is finished, the setting of the processing condition is changed into the setting of inhibiting retaining of the image data.

Thereby, since it is necessary for the user to designate the image data to be retained one by one in order to retain the image data, the image data is not retained in the case where retaining of the image data is not instructed. Accordingly, the image data to which the user determines and instructs to be retained in the image processing unit is only retained in the image processing unit. As a result, the image data is not automatically retained under situation where the user does not confirm it and the image data is not retained against the user's intension, so that it is possible to prevent the important image data from being illegally used by retaining in the image processing apparatus without the user's notice.

In addition, according to the third embodiment of the present invention, after the processing of the image data is terminated, since the settings of the processing conditions other than the retaining processing condition to indicate that the image data should be retained or not are maintained as they are. Accordingly, it is not necessary for the user to designate a plurality of processing conditions from the beginning when continuously processing the image data and a convenience of the operation of the image processing apparatus can be kept while preventing the illegal use of the image data.

Furthermore, according to the third embodiment of the present invention, under the standard setting of the retaining processing condition, the image data is inhibited from retained and when a predetermined time has passed from a point of time when the image data was processed, the settings of all processing conditions are automatically returned to the standard setting. Thereby, even if a next user uses the image processing apparatus after the user using the image processing apparatus before broke off the processing of the image data, the image is not automatically retained without the new user's confirmation.

In addition, according to the third embodiment of the present invention, since the image data temporarily stored in the working area in order to carry out the processing of the image data by the image processing apparatus is erased after the processing, it is possible to prevent the illegal use of the image data.

In addition, according to the third embodiment of the present invention, in the case where the image processing apparatus retains the image data in the temporary retaining area, the user confirms retaining of the image data, so that it is possible to prevent the image data from automatically retained without the user's confirmation.

In the meantime, the image processing apparatus according to the third embodiment of the present invention, as same as the above-described second embodiment, is provided with protecting means capable of changing the operation to protect the image data into valid or invalid by using encrypting or the like and when the operation of the protecting means is valid, it limits retaining of the image data. According to such an image processing apparatus, the protecting means switches the operational condition from invalid into valid or the detachable protecting means is provided so as to make the operation valid.

Under the condition where the operation of the protecting means is valid, this image processing apparatus retains the processed image data in the storage unit only when accepting the instruction to retain the image data and does not retain the image data when the instruction to retain the image data is not accepted. Thereby, also in this case, the image processing apparatus according to the third embodiment of the present invention protects the image data to be processed and at the same time, prevents the image data from being automatically retained without the user's confirmation, so that it is possible to prevent the important image data from being automatically retained in the image processing apparatus without the user's notice and it is possible to prevent the illegal use thereof.

In the meantime, in this description, the image processing apparatus according to the first to third embodiments of the present invention is defined as an MFP provided with multiple functions such as a facsimile apparatus, a copying machine, and a printer or the like, however, not limited to this, it is an apparatus having a single functions such as the facsimile apparatus, the copying machine, and the printer or the like.

### INDUSTRIAL APPLICABILITY

As described above in detail, according to the image processing apparatus according to the first embodiment, since the operation of the image data by filing function for inputting and storing the image data in the image data storing means, and by the image data operating means for reading and outputting the image data stored by the image data storing means for printing is not entirely prohibited but it is partially limited when the image data protecting means is operating, an easily usable data processing apparatus, in which a document filing function is matched with a data security function and the security of the data is secured is realized.

In addition, according to the image processing apparatus of the first embodiment of the present invention, even in the case where the image processing apparatus is originally configured so that the operation for storing the image data in the image data storing means such as hard disk inside the apparatus is carried out even after the image processing is applied to the image data, the operation of the image data is changed so as to be different from the original one in order to improve the security of the image data stored in the image data storing means.

In addition, according to the image processing apparatus of the first embodiment of the present invention, the inputted image data is encrypted at once and then, it is decoded upon processing, so that the security of the image data is maintained.

Further, according to the image processing apparatus of the first embodiment of the present invention, since the image data stored in the image data storing means such as hard disk inside the apparatus is replaced with the random data, even if the image data storing means itself is taken out, the security of the image data is maintained.

In addition, according to the image processing apparatus of the first embodiment of the present invention, since the image data stored in the image data storing means such as hard disk inside the: apparatus is forcibly erased, even if the image data storing means itself is taken out, the security of the image data is maintained because the image data cannot be reproduced.

Furthermore, according to the image processing apparatus of the first embodiment of the present invention, since the image data stored in the image data storing means such as hard disk inside the apparatus is forcibly erased after the image data itself is processed by the image processing means, the security of the image data with high confidentiality is maintained.

Still further, according to the image processing apparatus of the first embodiment of the present invention, since all image data stored in the image data storing means such as hard disk inside the apparatus are forcibly erased, even if the image data storing means itself is taken out, the security of the image data is maintained because the image data cannot be reproduced.

Still further, according to the image processing apparatus of the first embodiment of the present invention, since the image data to be processed by the image processing means is temporarily stored in the image data storing means and this image data temporarily stored in the image data storing means is immediately erased from the image data storing means when this image data itself is processed, when the image data with high confidentiality is processed, even if the image data storing means itself is taken out, the security of the image data with high confidentiality that is not stored in the image data storing means is maintained.

In addition, according to the image processing apparatus of the first embodiment of the present invention, the security of the image data used for image processing, which forms an image by recording the image data on a recording medium such as copy paper, specifically, which outputs the image data for printing, is maintained.

In addition, according to the image processing apparatus of the first embodiment of the present invention, the security of the image data used for image processing, which transmits the image data outside via the facsimile communication, is maintained.

Further, according to the image processing apparatus of the first embodiment of the present invention, the security of the image data used for image processing, which transmits the image data outside via the data communication, is maintained.

According to the second embodiment of the present invention, in the image processing apparatus provided with means for storing the image data, by limiting the image data stored therein, the image data stored in the image processing apparatus is prevented from being taken out outside and being illegally used so as to improve the security.

In addition, the second embodiment of the present invention provides the image processing apparatus provided with means for storing the image data, invalidating means for invalidating image data, and means for operating the invalidating means, and when the invalidating means is operating, by limiting the image data to be stored, the image data stored by the image processing apparatus is prevented from being taken out outside and illegally used so as to improve the security thereof.

In addition, the second embodiment of the present invention provides the image processing apparatus provided with means for storing the image data and capable of further providing invalidating means for invalidating image data, and when the invalidating means is provided, by limiting the image data to be stored, the image data stored by the image processing apparatus is prevented from being taken out outside and illegally used so as to improve the security thereof.

In addition, the second embodiment of the present invention, in the image processing apparatus capable of operating the invalidating means for invalidating image data provided with means for storing the image data, when the image processing apparatus stores the information indicating whether the invalidating means is operating or not and the above-described stored information indicates that the invalidating means is operating, by limiting the image data to be stored, the image data stored by the image processing apparatus is prevented from being taken out outside and being illegally used so as to improve the security of the image data.

Further, since the second embodiment of the present invention can carry out the processing such as print outputting with respect to the image data stored by the image processing apparatus, a convenience as same as the conventional one to reuse the image data is kept.

Furthermore, according to the second embodiment of the present invention, by only allowing the image data accepting the designation of storing to be stored and prohibiting other image data from being stored, an excellent advantage is realized, specifically, both of a convenience to store the image data and reuse it and security to invalidate the image data and prevent from being illegally used can be improved.

According to the third embodiment of the present invention, since the setting of the processing condition to indicate whether the image data should be retained or not among the settings of a plurality of processing conditions is returned to the standard setting to inhibit retaining of the image data when the processing of the image data is terminated, in order to retain the image data, it is necessary for the user to designate the image data to be retained one by one. Therefore, the image data is not automatically retained without the user's confirmation.

In addition, according to the third embodiment of the present invention, since the setting of the processing condition is returned to the standard setting including that to inhibit retaining of the image data when a predetermined time has passed from a point of time when the image data was processed, even if the processing of the image data was broken off before, the image data is not automatically retained without the user's confirmation when he or she carries out the processing of the image data in the next place.

Further, according to the third embodiment of the present invention, the setting of the processing condition to indicate whether the image data should be retained or not is to retain the image data accepting the instruction to retain individually and in accordance with the set processing condition, the image processing apparatus processes the image data. Thereby, the image data that the user determines to be retained in the image processing apparatus is only retained, and the image data is not automatically retained without the user's confirmation, so that the important data is retained in the image processing apparatus without the user's notice so as to prevent the image data from being illegally used.

In addition, according to the third embodiment of the present invention, when the processing of the image data is terminated, since the setting of the processing condition to indicate that the image data should be retained or not is automatically changed into the setting to inhibit retaining of the image data, in order to retain the image data in the image processing apparatus, it is necessary for the user to instruct the image data to be retained and the image data is not automatically retained without the user's confirmation. In addition, since the settings of the processing conditions other than that to indicate that the image data should be retained or not are maintained as they are, it is not necessary for the user to instruct the setting from the beginning when continuously processing the image data and a convenience of the operation of the image processing apparatus can be kept while preventing the illegal use of the image data.

In addition, according to the third embodiment of the present invention, it is possible to change the operation to protect the image data into valid or invalid, and when the operation to protect the image data is valid, the image processing apparatus changes the setting of the processing condition to indicate that the image data should be retained or not into the setting to automatically inhibit retaining of the image data. Therefore, it is possible to protect the image data to be processed and at the same time, it is possible to prevent the image data from being automatically retained without the user's confirmation.

Further, according to the third embodiment of the present invention, since the processing condition to indicate that the image data should be retained or not is retained with the setting to inhibit retaining of the image data as the standard, when the user uses the image processing apparatus, the image data is not automatically retained without the user's confirmation.

In addition, according to the third embodiment of the present invention, since the image data temporarily stored in order to carry out the processing of the image data is erased after the processing of the image data, it is possible to prevent the image data from being illegally used as it is retained.

Further, according to the third embodiment of the present invention, since the information to indicate that the image data is retained is outputted before retaining the image data, the image data is prevented from being automatically retained without the user's confirmation and an excellent advantage is realized, specifically, it is possible to prevent the important image data from being retained and being illegally used without the user's notice.

Further information is given in the following itemized list:
1. An image processing apparatus comprising: image data storing means for storing image data; image data operating means for carrying out an operation for inputting image data by a filing function and storing it in said image data storing means or carrying out an operation for reading out the image data stored by said image data storing means and outputting it; and image processing means for image-processing the image data outputted by said image data operating means, characterized by comprising
   image data protecting means for inhibiting the operation by said image data operating means to the image data stored by said image data storing means;
   wherein, when said image data protecting means is operating, the operation of the image data by said image data operating means is limited.
2. An image processing apparatus comprising: image data storing means for temporarily storing image data; image processing means for reading out the image data stored in said image data storing means and image-processing it; and image data operating means for operating the image data stored in said image data storing means so as to be stored in said image data storing means when said image data is image-processed by said image processing means, characterized by comprising
   operation changing means for changing the operation of the image data by said image data operating means.
3. The image processing apparatus as set forth in item 2, characterized in that said operation changing means encrypts the inputted image data to store it in said image data storing means and decodes the encrypted image data stored in said image data storing means to supply it to said image processing means.
4. The image processing apparatus as set forth in item 2, characterized in that said operation changing means replaces the image data stored in said image data storing means with the random data when said image data is image-processed by said image processing means.
5. The image processing apparatus as set forth in item 2, characterized in that said operation changing means forcibly erases the image data stored in said image data storing means.
6. The image processing apparatus as set forth in item 5, characterized in that said operation changing means forcibly erases the image data stored in said image data storing means when said image data is image-processed by said image processing means.
7. The image processing apparatus as set forth in item 5, characterized in that said operation changing means forcibly erases all image data stored in said image data storing means.
8. The image processing apparatus as set forth in item 2, characterized in that said operation changing means temporarily stores the image data to be image processed by said image processing means in said image data storing means, and, when said image data is image-processed by said image processing means, erases said image data from said image data storing means.
9. The image processing apparatus as set forth in any one of items 2 through 8, characterized in that said image processing means records the image data on a recording medium to form an image.
10. The image processing apparatus as set forth in any one of items 2 through 8, characterized in that said image processing means transmits the image data to the outside via a facsimile communication.
11. The image processing apparatus as set forth in any one of items 2 through 8, characterized in that said image processing means transmits the image data to the outside via a data communication.
12. An image processing apparatus comprising: image data accepting means for accepting image data; and image data retaining means for retaining the image data accepted by said image data accepting means; characterized by comprising
   limiting means for limiting retaining of the image data by said image data retaining means.
13. An image processing apparatus comprising: image data accepting means for accepting image data; image data retaining means for retaining the image data accepted by said image data accepting means; processing means for processing the image data accepted by said image data accepting means; invalidating means for invalidating image data; and switching means for switching said invalidating means into the operational condition or the non-operational condition; characterized by comprising
   limiting means for limiting retaining of the image data by said image data retaining means when said invalidating means is switched into the operational condition by said switching means.
14. An image processing apparatus comprising: image data accepting means for accepting image data; image data retaining means for retaining the image data accepted by said image data accepting means; processing means for processing the image data accepted by said image data accepting means; and capable additionally comprising invalidating means for invalidating image data; characterized by comprising
   limiting means for limiting retaining of the image data by said image data retaining means when said invalidating means is provided.
15. The image processing apparatus as set forth in item 12 or 13, characterized by further comprising:
   operation condition storing means for storing information indicating that said invalidating means is under operational condition or non-operational condition;
   referring means for referring to the information stored by said operation condition storing means; and
   limiting means for limiting retaining of the information by said image data retaining means when the information referred by said referring means indicates that said invalidating means is under the operational condition.
16. The image processing apparatus as set forth in any one of items 13 through 15, characterized in that said processing means also can process the image data stored by said image data retaining means.
17. The image processing apparatus as set forth in any one of items 12 through 16, characterized by further comprising retaining instruction accepting means for accepting a retaining instruction to designate the image data to be retained in said image data retaining means,
   wherein said limiting means allows said image data retaining means to retain the image data to which the retaining instruction is accepted by said retaining instruction accepting means.
18. An image processing apparatus, comprising: condition changing means for individually changing settings of a plurality of processing conditions for processing image data from the standard setting; and processing means for processing the image data in accordance with the plural processing conditions including the processing condition whose setting is changed by said condition changing means; characterized by comprising:
   condition returning means for returning the setting of a predetermined processing condition from among the plural processing conditions, which is changed from the standard setting by said condition changing means, into the standard setting every time the processing of the image data by said processing means is finished.
19. The image processing apparatus as set forth in item 18, characterized by further comprising image data retaining means for retaining the image data whose processing by said processing means is finished;
   wherein said predetermined processing condition is whether the image data processed by said processing means should be retained in said image data retaining means or not; and
   the standard setting of said predetermined processing condition is inhibiting of retaining the image data processed by said processing means in said image data retaining means.
20. The image processing apparatus as set forth in item 18 or 19, characterized by further comprising:
   determining means for determining whether a predetermined time has passed from a point of time when processing of the image data was carried out by said processing means; and
   means for returning the setting of the processing condition changed by said condition changing means into the standard setting when said determining means determines that the predetermined time has passed.
21. An image processing apparatus comprising: image data accepting means for accepting image data; image data retaining means for retaining image data; processing condition storing means for storing a plurality of processing conditions upon processing image data; and processing means for processing, in accordance with each processing condition stored by said processing condition storing means, the image data accepted by said image data accepting means; characterized by comprising:
   retaining instruction accepting means for individually accepting a retaining instruction for retaining the image data to be retained in said image data retaining means from among the image data accepted by said image data accepting means; and
   means for, when said retaining instruction accepting means accepts the retaining instruction, storing, in said processing condition storing means, the setting of the retaining processing condition indicating whether the image data should be retained or not by said image data retaining means as the setting to retain in said image data retaining means the image data to which the retaining instruction is accepted by said retaining instruction accepting means.
22. The image processing apparatus as set forth in item 21, characterized by further comprising:
   changing means for changing the setting of the retaining processing condition stored by said processing condition storing means into the setting to inhibit retaining of the image data by said image data retaining means, when said processing means processes the image data where said processing condition storing means stores the retaining processing condition being set to retain the image data in said image data retaining means; and
   means for maintaining the settings of the processing conditions other than the retaining processing condition stored by said processing condition storing means.
23. The image processing apparatus as set forth in item 22, characterized by further comprising protecting means capable of switching an operation to protect the image data into valid or invalid,
   wherein said changing means is configured so as to be operated when the operation of said protecting means is valid.
24. The image processing apparatus as set forth in any one of items 21 through 23, characterized in that said processing condition storing means is configured so as to store the setting of the retaining processing condition to inhibit retaining of the image data by said image data retaining means as the standard setting.
25. The image processing apparatus as set forth in any one of items 21 through 24, characterized by further comprising:
   temporary storing means for temporarily storing image data accepted by said image data accepting means; and
   means for erasing the image data stored by said temporary storing means when the processing of said image data is completed by said image processing means.
26. The image processing apparatus as set forth in any one of items 21 through 25, characterized by further comprising:
   means for outputting the information indicating that said image data retaining means retains the image data before said image data retaining means retains the image data when the retaining processing condition is set so as to retain the image data in said image data retaining means.

## Claims

1. An image processing apparatus comprising:
image data accepting means (2, 10) for accepting image data;
image data storing means (6a) for storing the image data accepted by said image data accepting means (2, 10);
image data retaining means (12) for retaining the image data stored by the image data storing means (6a);
processing means (6, 8) for processing the image data accepted by said image data accepting means (2, 10);
image data erasing means (9, 15b) for erasing the image data temporarily retained in the image data retaining means (12);
means (8) for switching said image data erasing means (9, 15b) into an operational condition or a non-operational condition; and
security means (9a, 9b, 9c; 15b) for performing a security operation for the image data accepted by the image data accepting means (2, 10), **characterized in that**
when the image data erasing means (9, 15b) is switched into the operational condition by the means (8), the image data erasing means (9, 15b) erases the image data temporarily retained in the image data retaining means (12) so as not to be read in a predetermined processing;
the processing means (6, 8) processes the image data retained in the image data retaining means (12);
the security means (9a, 9b, 9c; 15b) encrypts the image data stored by the image data storing means (6a) and then the encrypted image data is retained in the image data retaining means (12); and
the security means (9a, 9b, 9c; 15b) decodes the image data retained in the image data retaining means (12) and then the decoded image data is processed by the processing means (6, 8).

2. The image processing apparatus according to claim 1, wherein the predetermined processing is to update the image data retained in the image data retaining means (12) to bit data configured at random.

3. The image processing apparatus according to claim 1, wherein the predetermined processing is to perform a processing of erasing the image data retained in the image data retaining means (12) by a plurality of times.

## Patentansprüche

1. Bildverarbeitungsvorrichtung, umfassend:
ein Bilddaten annehmendes Mittel (2, 10), um Bilddaten anzunehmen;
ein Bilddaten speicherndes Mittel (6a), um die von dem Bilddaten annehmenden Mittel (2, 10) angenommenen Bilddaten zu speichern;
ein Bilddaten zurückbehaltendes Mittel (12), um die von dem Bilddaten speichernden Mittel (6a) gespeicherten Bilddaten zurückzubehalten;
ein Verarbeitungsmittel (6, 8), um die von dem Bilddaten annehmenden Mittel (2, 10) angenommenen Bilddaten zu verarbeiten;
ein Bilddaten löschendes Mittel (9, 15b), um die in dem Bilddaten zurückbehaltenden Mittel (12) vorübergehend zurückbehaltenen Bilddaten zu löschen;
ein Mittel (8), um das Bilddaten löschende Mittel (9, 15b) in einen operativen Zustand oder einen nicht operativen Zustand zu schalten; und
ein Sicherheitsmittel (9a, 9b, 9c; 15b), um eine Sicherheitsoperation für die von dem Bilddaten annehmenden Mittel (2, 10) angenommenen Bilddaten durchzuführen, **dadurch gekennzeichnet, dass**
wenn das Bilddaten löschende Mittel (9, 15b) durch das Mittel (8) in den operativen Zustand geschaltet wird, das Bilddaten löschende Mittel (9, 15b) die in dem Bilddaten zurückbehaltenden Mittel (12) vorübergehend zurückbehaltenen Bilddaten löscht, um in einer vorbestimmten Verarbeitung nicht gelesen zu werden;
das Verarbeitungsmittel (6, 8) die in dem Bilddaten zurückbehaltenden Mittel (12) zurückbehaltenen Bilddaten verarbeitet;
das Sicherheitsmittel (9a, 9b, 9c; 15b) die von dem Bilddaten speichernden Mittel (6a) gespeicherten Bilddaten verschlüsselt und dann die verschlüsselten Bilddaten in dem Bilddaten zurückbehaltenden Mittel (12) zurückbehalten werden; und
das Sicherheitsmittel (9a, 9b, 9c; 15b) die in dem Bilddaten zurückbehaltenden Mittel (12) zurückbehaltenen Bilddaten decodiert und dann die decodierten Bilddaten von dem Verarbeitungsmittel (6, 8) verarbeitet werden.

2. Bildverarbeitungsvorrichtung nach Anspruch 1, wobei die vorbestimmte Verarbeitung darin besteht, die in dem Bilddaten zurückbehaltenden Mittel (12) zurückbehaltenen Bilddaten in zufällig konfigurierte Bit-Daten zu aktualisieren.

3. Bildverarbeitungsvorrichtung nach Anspruch 1, wobei die vorbestimmte Verarbeitung darin besteht, eine Verarbeitung zum Löschen der in dem Bilddaten zurückbehaltenden Mittel (12) zurückbehaltenen Bilddaten eine Vielzahl von Malen durchzuführen.

## Revendications

1. Appareil de traitement d'images comprenant :
un moyen d'acceptation de données d'image (2, 10) pour accepter des données d'image ;
un moyen de stockage de données d'image (6a) pour stocker les données d'image acceptées par ledit moyen d'acceptation de données d'image (2, 10) ;
un moyen de retenue de données d'image (12) pour retenir les données d'image stockées par le moyen de stockage de données d'image (6a) ;
un moyen de traitement (6, 8) pour traiter les données d'image acceptées par ledit moyen d'acceptation de données d'image (2, 10) ;
un moyen d'effacement de données d'image (9, 15b) pour effacer les données d'image temporairement retenues dans le moyen de retenue de données d'image (12) ;
un moyen (8) pour commuter ledit moyen d'effacement de données d'image (9, 15b) vers une condition opérationnelle ou vers une condition non opérationnelle ; et
un moyen de sécurité (9a, 9b, 9c ; 15b) pour réaliser une opération de sécurité pour les données d'image acceptées par le moyen d'acceptation de données d'image (2, 10), **caractérisé en ce que**
lorsque le moyen d'effacement de données d'image (9, 15b) est commuté vers la condition opérationnelle par le moyen (8), le moyen d'effacement de données d'image (9, 15b) efface les données d'image temporairement retenues dans le moyen de retenue de données d'image (12) afin qu'elles ne soient pas lues dans un traitement prédéterminé ;
le moyen de traitement (6, 8) traite les données d'image retenues dans le moyen de retenue de données d'image (12) ;
le moyen de sécurité (9a, 9b, 9c ; 15b) chiffre les données d'image stockées par le moyen de stockage de données d'image (6a) et ensuite les données d'image chiffrées sont retenues dans le moyen de retenue de données d'image (12) ; et
le moyen de sécurité (9a, 9b, 9c ; 15b) décode les données d'image retenues dans le moyen de retenue de données d'image (12) et ensuite les données d'image décodées sont traitées par le moyen de traitement (6, 8).

2. Appareil de traitement d'images selon la revendication 1, dans lequel le traitement prédéterminé est une mise à jour des données d'image retenues dans le moyen de retenue de données d'image (12) vers des données binaires configurées aléatoirement.

3. Appareil de traitement d'images selon la revendication 1, dans lequel le traitement prédéterminé est une réalisation d'un traitement d'effacement des données d'image retenues dans le moyen de retenue de données d'image (12) selon une pluralité de fois.
